# EUROPEAN PATENT SPECIFICATION

(11) **EP 4 675 974 B1**
(45) Date of publication and mention of the grant of the patent: **19.08.2026**
(21) Application number: 24186818.1
(22) Date of filing: 05.07.2024
(51) Int. Cl.: H04L 9/40, H04L 51/00, H04L 51/08, H04L 51/18, H04L 51/48

(54) **METHOD FOR ESTABLISHING A SECURE E-MAIL COMMUNICATION CHANNEL, DATA PROCESSING SYSTEM, COMPUTER PROGRAM, AND COMPUTER-READABLE MEDIUM**
VERFAHREN ZUM AUFBAU EINES SICHEREN E-MAIL-KOMMUNIKATIONSKANALS, DATENVERARBEITUNGSSYSTEM, COMPUTERPROGRAMM UND COMPUTERLESBARES MEDIUM
PROCÉDÉ D'ÉTABLISSEMENT D'UN CANAL DE COMMUNICATION DE COURRIER ÉLECTRONIQUE SÉCURISÉ, SYSTÈME DE TRAITEMENT DE DONNÉES, PROGRAMME INFORMATIQUE ET SUPPORT LISIBLE PAR ORDINATEUR

(43) Date of publication of application: 07.01.2026
(73) Proprietor: Der Petersen GmbH & Co. KG, 24837 Schleswig (DE)
(72) Inventor: DE JONGH, Henry, 25813 Husum (DE); PETERSEN, Christian, 24837 Schleswig (DE)
(74) Representative: Jostarndt Patentanwalts-AG

(56) References cited:
- US-A1- 2018 198 799
- US-A1- 2022 337 568

## Description

The present invention relates to establishing secure communication channels by encryption and decryption, using a cloud service.

### BACKGROUND OF THE INVENTION

Prior art in the field of securing e-mail communication often makes use of SSL (Secure Sockets Layer) or TLS (Transport Layer Security) encryption mechanisms. Alternatively, public keys of recipients are stored in DNS (Domain Name System) records for asymmetric encryption such that only the recipient can decrypt an e-mail encrypted with the public key using their private key. However, there is no guarantee that the encryption remains active throughout the delivery process. Any node may accept the encrypted e-mail and forward it unencrypted.

Additionally, stored e-mails are typically also accessible to the e-mail provider which poses a trust issue since the provider is able to read and filter the user's e-mails by contents. US patent application US2018/198799 A1 is further prior art.

### SUMMARY OF THE INVENTION

In view of the above, the present invention seeks to provide an encrypted e-mail to a recipient in such a way, that only the recipient is able to decrypt the e-mail, even if the recipient does not have any prior encryption/decryption software. The present invention solves this problem by providing a computer implemented method comprising the features of independent claim 1. Advantageous refinements and embodiments of the method are derived from dependent claims 2-19. Furthermore, the problem is solved by a data processing system according to claim 20. The problem is also solved by a computer program according to claim 21. Additionally, the problem is solved by a computer-readable medium according to claim 22.

Securing e-mail communication, for example in a clinical setting with confidential patient data or a law firm with confidential records, has become increasingly more important with stricter data security laws. In order to encrypt and decrypt data, there must be a pre-negotiated common secret or mechanism between the sender and recipient. A manual approach is to share a password verbally, be it face to face, over the phone, or via postal mail. E-mail senders must in turn keep a record of all passwords and manually encrypt sensitive confidential data as e-mail attachments.

According to the present invention, the computer-implemented method for establishing a secure e-mail communication channel between a sender and at least one recipient includes the following steps:
- intercepting via a first software, which is connected to a first cloud service, between an e-mail client of the sender and a respective e-mail provider of the sender an outgoing first e-mail;
- encrypting via the first software the first e-mail with an encryption key;
- storing via the first software a first data object, which contains either the encrypted first e-mail or the decryption key, on the first cloud service or a second cloud service;
- generating an access link containing a unique identifier pointing to the first data object on the first or second cloud service and storing an e-mail address of the recipient in the first cloud service assigned to the access link;
- integrating the access link with a second data object, wherein the second data object contains either the decryption key or the encrypted first e-mail, wherein it contains the decryption key if the first data object contains the encrypted first e-mail and vice versa,
- sending the second data object in a second e-mail or as an e-mail attachment attached to a second e-mail via the first software to the e-mail provider of the sender and to the e-mail address of the recipient;
- authenticating in the first cloud service the recipient upon following the access link via
   ∘ directing the recipient in a browser on a recipient's user device to the first cloud service;
   ∘ prompting the recipient to enter a password; and
   ∘ sending a confirmation mail with a confirmation link to the e-mail address of the recipient stored in the first cloud service;
- requesting and receiving via the first cloud service the first data object in the recipient's browser upon following the confirmation link;
- decrypting and displaying the first e-mail to the recipient on the recipient's user device.

The present invention proposes to use a software, such as an IMAP (Internet Message Access Protocol) and SMTP (Simple Mail Transfer Protocol) server for retrieving and sending e-mails, wherein the sender preferably has a local software application installed which directs the traffic from the e-mail client to the IMAP/SMTP-server. Preferably, the IMAP/SMTP-server is run locally on the sender's user device. The vulnerability to man-in-the-middle attacks of the IMAP and SMTP protocols is used to insert a software program between the e-mail client, i.e., an e-mail reader such as Microsoft Outlook, of the sender and their respective e-mail provider(s). A man-in-the-middle attack is a cyberattack, where an attacker secretly relays and possibly alters the communications between the sender and receiver, who each believe that they are directly communicating with each other, as the attacker has inserted themselves between the two parties.

The sender, upon writing and hitting "send" on a drafted e-mail using their e-mail client will (automatically) connect to the SMTP server of the software that thus intercepts the outgoing e-mail message. The software program will then encrypt the e-mail and establish a connection to their respective e-mail provider, where the encrypted e-mail is then sent on their behalf. Any immediate errors such as a wrong password or an invalid recipient are relayed back to the e-mail client, enhancing transparency for the user and handling remote errors by the e-mail client as expected.

Two preferred ways of carrying out the method for establishing a secure e-mail channel will be discussed. According to the first way, after the software has encrypted the first e-mail with content and attachments with the encryption key, the software uploads a first data object containing the encrypted e-mail (but not the decryption key) to a cloud storage service (a second cloud service). The cloud storage service returns a first access link pointing to the encrypted e-mail on the cloud storage service (the second cloud service). The software stores the first access link together with the e-mail address of the recipient in the first cloud service. The software generates a second access link containing a unique identifier identifying the first access link in the first cloud service. The software then integrates the (second) access link with a second data object, which in the described case here is the decryption key, and sends the second data object as content of a second e-mail through the first e-mail provider, the e-mail provider of the sender, to the e-mail address of the recipient. In the integration process, the decryption key is separated through a hashtag ('#') symbol from the (second) access link. This way, when the link is followed, the decryption key, as it is part of the hashtag, does not get communicated to the server because of the hash and fragment identifier.

At this stage, only the sender is able to decrypt the file. The cloud storage service (second cloud service) only stores encrypted content, such that in the event someone (accidentally) gains access to the location they cannot read the stored e-mail.

The recipient will then receive an e-mail over a potentially insecure connection containing the (second) access link, a URL (Uniform Resource Locator), pointing to the first cloud service and containing the decryption key as part of a hashtag in the link. At this point, even though the recipient (and potential third parties such as the e-mail provider) know the decryption key for the first e-mail, they do not have access to the encrypted first e-mail yet, because they do not have access to the first access link pointing to the file on the cloud storage service (second cloud service) yet. Because of the separation with the hashtag, only JavaScript in the browser on the recipient's user device can grab the decryption key from the URL. Until the cloud storage service (second cloud service) sends the encrypted data to the web browser of the recipient, it remains impossible for any party besides the sender to decrypt and read the e-mail.

Instead of immediately sending the first data object (or at least the encrypted first e-mail) to the browser, the second access link only connects the recipient to the first cloud service, where he will now be prompted to choose and set a password. After the password is set, a confirmation e-mail is sent from the first cloud service to the e-mail address (of the recipient) which the sender provided to the first cloud service, wherein the confirmation e-mail contains a link that must be opened by the recipient. Clicking on the link will confirm the password change. Unless the mailbox of the recipient has been severely compromised, it is sufficiently safe to assume at this point that the recipient is indeed the person the first e-mail was intended for. The first cloud server will now release the access link and requests the first data object (or at least the encrypted first e-mail) from the cloud storage server (second cloud service), which will send first data object (or at least the encrypted first e-mail) to the recipient's browser. Now the recipient has both the first data object (or at least the encrypted first e-mail) and the decryption key available in their browser. For example, JavaScript together with the SubtleCrypto interface of the Web Crypto API can be used to decrypt the first e-mail in the known way and display the decrypted content in the browser of the recipient's user device (the second user device) but using JavaScript libraries alone also suffices for the decryption.

This described first way, of course, has some drawbacks due to large file storage requirements which can quickly transform into a detrimental financial burden. Therefore, according to the second way, it is not the encrypted e-mail with the content and attachments (as (part of) the first data object) which is uploaded but the decryption key. The software intercepts and encrypts the first e-mail with the content and attachments, and converts it or adds it, e.g., to an HTML (Hyper Text Markup Language) file, i.e., the encrypted e-mail can be saved as a JavaScript variable in the HTML file. Using an HTML file has the advantage that it can be opened in a standard browser of any operating system with minimal effort, i.e. alternative data formats that meet these criteria might also be used. After the software has encrypted the first e-mail and formatted it as an HTML file, the software stores the corresponding decryption key as (part of) a first data object on the first cloud service. As a side note, it is also possible to store the first data object on a second cloud service (such as a public cloud storage service), in which case a second access link pointing to the file would be generated and stored on the first cloud service as discussed with the first way. The software stores the first data object together with the recipient's e-mail address on the first cloud service. Afterwards, the software generates an access link containing a unique identifier identifying the first data object in the first cloud service. The software integrates the access link into the second data object, which contains at least the encrypted e-mail file. Preferably the software integrates the access link into the HTML-file (encrypted first e-mail) as a further JavaScript variable. The software then attaches the second data object to a second e-mail and sends the second e-mail via the provider to the recipient (service-to-service). WebSockets can be used both in the software and in the browser to communicate with the cloud service.

The recipient receives the second e-mail and opens the second data object by clicking on it, upon which they are directed in their browser to the first cloud service, preferably a web application of the software, which prompts them to set a password, as before. After the recipient set a password, a confirmation mail with a confirmation link is sent from the first cloud service to the e-mail address of the recipient that the sender initially entered. When the recipient clicks on the confirmation link (and thereby confirms his identity by proving access to his mailbox) the first cloud service retrieves the first data object containing the decryption key using the access link. Now, the recipient has the encrypted first e-mail, preferably as an HTML attachment, and the decryption key in their browser and JavaScript is used to decrypt the first e-mail. The browser provides a simple e-mail reader to display the decrypted content in the browser on the recipient's user device. Should the recipient also have the respective software application installed on their user device, this way of sending encrypted content can be further exploited. Preferably, all e-mails exchanged between users who use the software with a local software application installed send encrypted HTML-files to one another, wherein the process of retrieving the respective key from the cloud service preferably takes place automatically via the respective software application and the IMAP/SMTP-server which communicates to the cloud (storage) service. The local software application then forwards the decrypted e-mails to the e-mail client. This way, the users can send and receive e-mails seemingly as usual, even though the e-mails are sent as encrypted HTML-attachments, because they are decrypted and reformatted by the local software application and then forwarded to the respective e-mail client of the user. In the second way, e.g., a native implementation of TLS in JavaScript and tools to write crypto based and network-heavy webapps, such as Forge, is used whenever a secure context (HTTPS) is unavailable as is the case with the HTML files. Asymmetric private keys or RSA-OAEP-SHA256 stored in PKCS#8 can provide a decryption key to decrypt AES-CBC-256 symmetric data.

Every recipient (in case that there are multiple) is sent a different, personalized copy as every recipient gets a different HTML file or access link and/or second e-mail. In this case of multiple recipients, errors are handled by either giving the sender's e-mail client an error code such that the e-mail client can attempt to send the first e-mail later again in case that sending the first e-mail to all recipients failed simultaneously. Or if one or more recipients successfully received the first e-mail, but others did not, an error report e-mail is added ("APPEND", IMAP) in the inbox of the sender, wherein the error report e-mail contains information about names and e-mail addresses to which the send attempt failed and/or succeeded. This way, sending multiple copies to the recipients through multiple send attempts because of individual failed attempts can be avoided, and errors can be handled manually. In the software, the error is logged during SMTP to a local database/file. When there is an IMAP connection that attempts to synchronize the inbox folder, the error report e-mail is inserted to the target folder, and the sender immediately receives the error report.

With these two ways, creating and sending an encrypted file without a common secret, i.e., a shared password becomes possible. This method is especially easy to implement and reliably protects against man-in-the-middle attacks. When an unauthorized party is able to intercept and read e-mail traffic sent to the recipient and sets or changes the password without the recipient's knowledge, it's possible to warn the recipient of this change by e-mail (assuming the third party does not have sufficient access to delete e-mails) or by displaying an alert through additional software installed on the recipient's computer (the local software application if installed), that directly communicates with the cloud service outside of e-mail communication. Furthermore, if the recipient ever forgets their password, they can reset it at any time, with a confirmation e-mail to confirm the changes. The sender never has to worry about the recipient forgetting a password and does not have to send the data again.

According to an embodiment of the present invention, the step of authenticating the recipient further includes prompting the recipient to enter an e-mail address, wherein multiple e-mail addresses of the recipient can be assigned to the entered e-mail address, and wherein an account is created on the first cloud service and assigned to at least one of the recipient's e-mail addresses, preferably the e-mail address entered by the recipient. It's also possible to create a preliminary account in the moment when the sender attempts to send the first e-mail and the software does not find a public key of the recipient. Should the recipient enter a different e-mail address when prompted, this preliminary account will be assigned to the entered e-mail address. The confirmation mail will however be sent to the e-mail address which the sender provided. Additionally or alternatively, a public key is assigned to the account of the recipient. The public key can be generated from the private key, i.e. the password the recipient provides during the authentication process, using the RSA (Rivest-Shamir-Adleman) method. The public key is then available for future communications. It is however not necessary, according to the second way described above. Should a sender (the first sender or another sender) with the software send an e-mail to this recipient in the future, their public key is available in the first cloud service such that the local software can automatically encrypt the e-mail with the public key of the recipient. This is especially beneficial, when the first data object contains the encrypted e-mail, which can be encrypted with the public key of the recipient. However, in the case the first data object contains the decryption key the files can always be sent as described with respect to the second way described above.

In a further advantageous embodiment, the recipient is displayed a message at every log-in containing information about location and time of the last log-in and/or last log-in attempt. This message can for example be displayed in a pop-up window or as a text message Additionally or alternatively, at an unsuccessful log-in attempt the recipient is displayed a message containing information about location and time when the password was last changed. This way, even in the worst-case scenario, where a third party successfully sets a password on a recipient's behalf and hides all notifications in their mailbox, by the time the intended recipient attempts to enter their password at a future date, they would be notified that their password is incorrect with the date and other identifying information on when and where the password was last changed. This would alarm them that a third party is accessing their e-mails. However, here and in the following, it is assumed that the recipient's mailbox is secure and resolving further drastic intrusions of privacy are not addressed by the present invention.

According to a further advantageous embodiment, the recipient can set up a Multi-Factor-Authentication procedure for future log-ins. For example, the recipient can enter a phone number to their account, such that any relevant change in their account must be confirmed by entering a code that is sent via SMS to their phone. Using other authenticators, such as Google Authenticator, andOTP, FreeOTP Authenticator, FreeOTP+, Aegis Authenticator, Authy (Twilio), or Microsoft Authenticator, preferably in conjunction with biometric readers is also possible and within the scope of the present invention. Additionally or alternatively, the recipient can reset the password and confirm it via the Multi-Factor-Authentication procedure or by clicking a link in a new confirmation e-mail, preferably sent to the entered e-mail address. Preferably, the recipient receives an alert upon unsuccessful log-in attempts. However, other relevant changes on their account can also be asked to be confirmed via one of the chosen methods of the recipient and communicated to him via a method of his choice.

In another advantageous embodiment, the encryption key and the decryption key are the same. Using asymmetric encryption for the first encryption handshake is of course also possible. Here, an AES (Advanced Encryption Standard) is used for the symmetric encryption. Additionally or alternatively, the encryption key is a securely randomly generated key. It is preferable that the particular encryption key is used only for the encryption of this particular first e-mail. The software together with the first cloud service can be used to manage and store the encryption keys, such that the local software application is able to automatically decrypt sent e-mails and the sender doesn't have to keep a record of the encryption keys. It is preferable, that the software (automatically) handles generation of the securely randomly generated keys, the encryption process, and the management/storing of encryption (and decryption) keys once the sender has hit "send" on their drafted e-mail.

According to an advantageous embodiment, the recipient receives instruction in the second e-mail. The instructions can contain information on how to prove one's identity, set up an account and/or gain access to the first data object and display the encrypted content.

In an especially preferred embodiment, the first e-mail is encrypted with the encryption key and then inserted as a JavaScript variable in an HTML file, wherein the HTML file also contains the unique identifier as a JavaScript variable for a fast association of first data object and second data object. This accelerates the process of decryption key retrieval requests for the corresponding e-mail also at a later point and especially when there is a larger number of first data objects stored. The software converts the e-mail to an HTML file preferably automatically.

According to a further advantageous embodiment, an authentication token is stored using LocalStorage with Web Storage API on the recipient's user device. Token-based authentication is a protocol enabling users to verify their identity and receive a unique access token in return. During the validity period of this security token, users can access the website or application for which the token was issued without needing to re-enter their login credentials for every access to the same protected resource. These tokens function like a stamped ticket, granting access as long as they are valid, and are invalidated upon user logout or application termination. Unlike traditional password or server-based authentication, tokens provide an extra layer of security and allow administrators to closely monitor every action and transaction. Especially when using a local HTML file (as is the case in the second way described above), i.e. outside of secure contexts (HTTPS), this embodiment allows to store session data, so that the user can stay logged-in and authenticated. This embodiment is particularly convenient to use for the recipient.

The method can further include the following steps:
- determining whether a public key is available for the recipient in the first cloud service; and
- if a public key is available:
   ∘ encrypting via the first software the first e-mail with the public key of the recipient;
   ∘ wherein a local software application installed on the recipient's user device and connected to the first cloud service between an e-mail client of the recipient and the e-mail provider of the recipient intercepts, identifies and decrypts encrypted first e-mails before sending them to the e-mail client, such that encrypted and unencrypted e-mails are displayed alike to the recipient.

This further facilitates ease of use, especially of the first way of carrying out the method, i.e., when the first data object contains the encrypted e-mail. In this case, the first way could be carried out once, and afterwards (when the first way was used as a first encryption handshake) the e-mails can be sent using asymmetric encryption via service-to-service with an additional layer of protection because on the servers of the e-mail providers only the asymmetrically encrypted e-mails are stored. When both participants use a local software application, the e-mail clients can display the e-mails as they usually do as the local software applications already decrypt incoming e-mails using the user's respective private key, but on the servers of the respective e-mail providers, only encrypted content is available. According to a further advantageous embodiment, the encrypted first e-mail is signed with a public key of the sender for authentication. Additionally or alternatively, the encrypted first e-mail contains a/the public key of the sender. This way, spoofing is effectively prevented.

In a further advantageous embodiment, the method also comprises a replying step, via:
- drafting a reply e-mail to the encrypted first e-mail, wherein the reply is drafted in the browser using JavaScript if there is no local software application available on the recipient's user device;
- encrypting the reply e-mail with the public key of the sender;
- sending the encrypted reply e-mail to an e-mail address of the sender.

The drafting of the reply e-mail preferably takes place in a web application of the software. If corresponding local software application is installed on the recipient's device however, the reply can be drafted in the e-mail client of the recipient. The public key is preferably retrieved from the decrypted first e-mail to encrypt online replies. Alternatively, the recipient could be given a fake public key, which would be first decrypted on the first cloud service and re-encrypted with the real public key of the sender, i.e., one would be able to read along on the server of the first cloud service. Signing the e-mail with the public key of the sender therefore also further facilitates ease of use of the inventive method.

According to an advantageous embodiment, the software further processes the encrypted first e-mail, for example, marking them as spam, using blacklists to filter known spam e-mail addresses. The blacklist is preferably shared among local software applications on different user devices through the first cloud service. It's further possible to use an anti-virus program such as Windows Defender between the e-mail client and a local software application to prevent startup of malicious files. Existing blacklists of e-mail providers and their potential reporting features additionally still apply and work. E-mail senders can be confirmed with "DomainKeys Identified Mail" (DKIM). DKIM is a form of e-mail authentication that helps to prevent spammers and other malicious parties from impersonating a legitimate domain, using a digital signature to let the receiver of an e-mail know that the message was sent and authorized by the owner of a domain. It is also possible to insert another gateway between the e-mail client and the software, which can be used to filter e-mails. Such a gateway could also be directly integrated into a local software.

In one embodiment of the present invention, a second cloud service is used and the second cloud service is a public cloud storage service. For example, AWS (Amazon Web Service) can be used to store the first data object.

According to a further advantageous embodiment, the first data object on the first cloud service or second cloud service is deleted after a certain period of time. In an alternative or additional embodiment, the recipient can enter criteria for deletion and account settings regarding security on the first cloud service. By design, the first data objects are deleted after a certain period of time. It is also possible to give the recipient an option to mark certain (first) e-mails (or e-mail histories) as important such that the corresponding first data objects are excluded from the list of items to be deleted.

In an advantageous embodiment, the method contains a set-up step via:
- downloading and installing a software application locally on a user device;
- redirecting the traffic from a respective e-mail client on the user device to the first software via the local software application;
- registering an account with an e-mail address and a first password in the software connected to the first cloud service, wherein the registration is carried out via:
   ∘ upon registration request, sending a confirmation mail with a confirmation link to the entered e-mail address;
   ∘ creating the account assigned to the entered e-mail address after the confirmation link is followed.

The set-up step can take place beforehand on the sender's user device and/or can take place on the recipient's user device, especially also after the method was carried out at least once according to the first or second way described above. This makes the software particularly easy to use and allows for fast integration and data transfer.

According to a further advantageous embodiment, the method comprises a step of storing a private key via:
- creating a second password, which is preferably a securely randomly generated password created by the local software application, preferably automatically, i.e. without any user interaction;
- symmetrically encrypting the private key with the second password;
- uploading the encrypted private key to the first cloud service;
- storing the second password in an e-mail mailbox of the e-mail address, preferably automatically via the local software application;
and the method comprises the following steps to access the private key:
- asking the user to log in to their account on the first cloud service with their e-mail address and the first password;
- upon successful log-in, retrieving via the local software application the second password from the e-mail mailbox;
- retrieving the encrypted private key on the first cloud service;
- decrypting the private key via the local software application.

The user can be either the sender or the recipient, who have the software application installed. This method guarantees that the respective user never loses his private key and can access it from multiple devices on which he has the software application installed. The private key is used to decrypt incoming e-mails. In the case that a respective recipient has a public key, the respective sender can always encrypt first e-mails with the public key of the recipient. If the recipient lost their private key, the entire mailbox would be impossible to decrypt. In an even more preferred embodiment, the local software places a copy of the second password in a hidden folder name, and/or in a drafted e-mail message, and/or in a "sent"-folder in a MIME-header.

Preferably, the software is realized as an e-mail server plug-in using a simple incoming/outgoing e-mail transport callback function. This allows to immediately secure an entire company by adding the plug-in and skip intensive installing and configuration steps of the software on thousands of individual devices.

According to a second aspect of the invention, a data processing system is provided comprising means for carrying out the method of any of the embodiments described above. The data processing system preferably comprises at least two user devices, at least one cloud service, at least one IMAP/SMTP-server, and at least one e-mail service provider, wherein the user devices comprise at least one storage unit and at least one processing unit and the user devices are suitable for running an e-mail client, and/or a browser, and/or the local software application.

According to a third aspect of the invention, a computer program is provided comprising instructions which, when the program is executed by a computer of a data processing system, cause the data processing system to carry out the method of any of the embodiments described above.

According to a fourth aspect of the invention, a computer-readable medium is provided comprising instructions, which, when executed by a computer of a data processing system, cause the data processing system to carry out the method of any of the embodiments described above.

According to a further aspect of the invention, a computer-implemented method for sending an e-mail via a secure e-mail communication channel between a sender and at least one recipient is provided, including the following steps:
- intercepting via a first software, which is connected to a first cloud service, between an e-mail client of the sender and a respective e-mail provider of the sender an outgoing first e-mail;
- encrypting via the first software the first e-mail with an encryption key;
- storing via the first software a first data object, which contains either the encrypted first e-mail or the decryption key, on the first cloud service or a second cloud service;
- checking, whether an account is assigned to an e-mail address of the recipient in the first cloud service;
- generating an access link containing a unique identifier pointing to the first data object on the first or second cloud service and storing the e-mail address of the recipient in the first cloud service assigned to the access link;
- integrating the access link with a second data object, wherein the second data object contains either the decryption key or the encrypted first e-mail, wherein it contains the decryption key if the first data object contains the encrypted first e-mail and vice versa,
- sending the second data object in a second e-mail or as an e-mail attachment attached to a second e-mail via the first software to the e-mail provider of the sender and to the e-mail address of the recipient;
- authenticating in the first cloud service the recipient via:
   ∘ connecting to the first cloud service by following the link, wherein a local software application (if installed on the recipient's user device) automatically connects to the first cloud service or the recipient is directed in their browser to the first cloud service;
   ∘ proving access to a recipient's account or prompting the recipient to set a password if no account assigned to the e-mail address of the recipient was found when checking whether an account is assigned to the e-mail address of the recipient, wherein access to the recipient's account can be proven by performing at least one of the registered ways to log into the account such as MFA, session tokens, or e-mail-password-combination;
   ∘ sending a confirmation mail with a confirmation link to the e-mail address of the recipient stored in the first cloud service if no account assigned to the e-mail address of the recipient was found when checking, whether an account is assigned to the e-mail address of the recipient;
- requesting and receiving via the first cloud service the first data object either in the recipient's browser or in the local software application (if available) upon following the confirmation link or upon proving access to the recipient's account;
- decrypting and displaying the first e-mail to the recipient on the recipient's user device.

The decrypted e-mail can either be forwarded by the local software application to the e-mail client on the recipient's user device or displayed in the recipient's browser using e.g., JavaScript as when establishing a secure e-mail channel.

### ITEMS

A. A computer implemented method for establishing a secure e-mail communication channel between a sender and at least one recipient, including the following steps:
   - intercepting via a first software, which is connected to a first cloud service, between an e-mail client of the sender and a respective e-mail provider of the sender an outgoing first e-mail;
   - encrypting via the first software the first e-mail with an encryption key;
   - storing via the first software a first data object, which contains either the encrypted first e-mail or the decryption key, on the first cloud service or a second cloud service;
   - generating an access link containing a unique identifier pointing to the first data object on the first cloud service or second cloud service and storing an e-mail address of the recipient in the first cloud service assigned to the access link;
   - integrating the access link with a second data object, wherein the second data object contains either the decryption key or the encrypted first e-mail, wherein it contains the decryption key if the first data object contains the encrypted first e-mail and vice versa,
   - sending the second data object in a second e-mail or as an e-mail attachment attached to a second e-mail via the first software to the e-mail provider of the sender and to the e-mail address of the recipient;
   - authenticating in the first cloud service the recipient upon following the access link via
      ∘ directing the recipient in a browser on a recipient's user device to the first cloud service;
      ∘ prompting the recipient to set a password; and
      ∘ sending a confirmation mail with a confirmation link to the e-mail address of the recipient stored in the first cloud service;
      - requesting and receiving via the first cloud service the first data object in the recipient's browser upon following the confirmation link;
      - decrypting and displaying the first e-mail to the recipient on the recipient's user device.
B. The method of item A, wherein the step of decrypting and displaying the e-mail to the recipient includes:
   - using JavaScript with the SubtleCrypto interface of the Wep Crypto API to decrypt the e-mail and display the decrypted e-mail in the recipient's browser.
C. The method of item A or B, wherein the encryption key and the decryption key are the same, and/or wherein the encryption key is a securely randomly generated key, and/or wherein the encryption key is used only for this particular first e-mail.
D. The method of any one of the preceding items, wherein the recipient receives instructions in the second e-mail.
E. The method of any one of the preceding items, wherein the second cloud service is a public cloud storage service.

Further advantages, features, and advantageous refinements of the invention are derived from the dependent claims and the following description of preferred embodiments with reference to the figures.

### BRIEF DESCRIPTIONS OF THE DRAWINGS

With reference to the accompanying drawings, different aspects of the invention will be described. In particular, two preferred ways of carrying out the method according to claim 1 will be discussed in more detail.

Of the figures:
- Figs. 1 and 2: show a data processing system carrying out a first way of the method according to an embodiment of the invention;
- Figs. 3 and 4: show a data processing system carrying out a second way of the method according to an embodiment of the invention;
- Figs. 5a, 5b, and 6: show a set-up process and a storing of a private key according to an embodiment of the invention; and
- Fig. 7: shows a novel e-mail sending method.

### DETAILED DESCRIPTION OF THE DRAWINGS

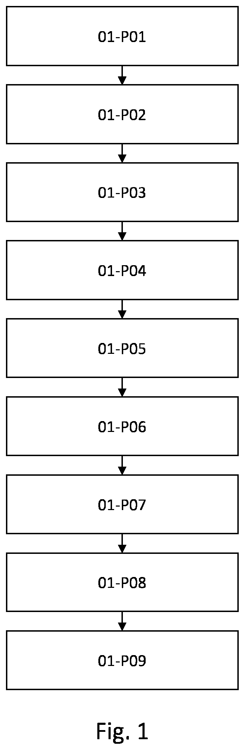

Reference will now be made in detail to the drawings, in which figures 1 and 2, and 3 and 4 respectively show a way of carrying out important steps of the proposed method for establishing a secure e-mail communication channel. Throughout the figures, a reference number code is used, namely XX-(s)YY(s/r), wherein XX designates the respective figure number and YY designates the corresponding object number. An "s" after the hyphen designates a method step, whereas an "s" after the YY designates an object on the sender's side and an "r" after the YY designates an equal object on the recipient's side. This way when reference is made to an object and the "s" or "r" after the YY is left out, the object shall be meant in general without a limitation on which side it is.

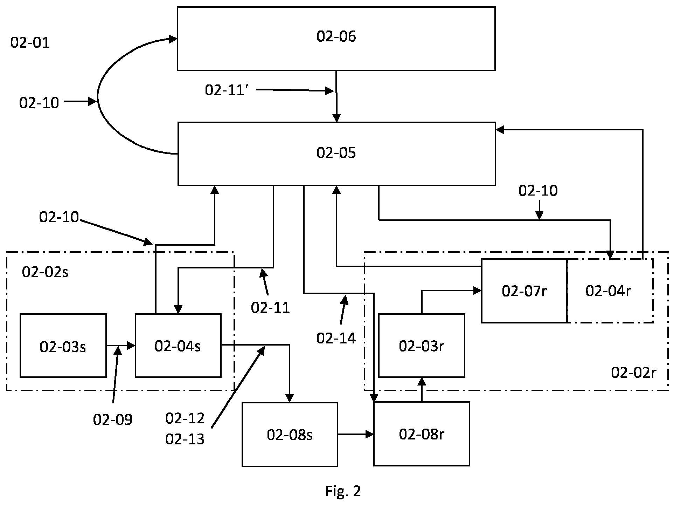

Figures 1 and 2 visualize the exemplary first way of carrying out steps of the method, which was already discussed under SUMMARY OF THE INVENTION. Here, figure 1 shows a flowchart with steps 01-P01 to 01-P09, which will be explained in detail with reference to the data processing system 02-01 in figure 2. The exact order in which method steps 01-P01 to 01-P09 can of course vary and the skilled person will understand in which alternative orders the respective steps 01-P01 to 01-P09 can also be carried out, while still establishing a secure e-mail communication channel.

The data processing system 02-01 in figure 2 comprises two user devices 02-02, a sender's user device 02-02s and a recipient's user device 02-02r, wherein the user devices 02-02 here only show the respective features necessary to carry out the method steps. The respective user device 02-02 can be a personal computer, a mobile phone, or any other device with a storage unit and a processing unit, as long as it has an internet connection and is at least able to run a respective browser 02-07 and is able to display information. Here, both user devices 02-02 have an e-mail client 02-03 installed locally. Additionally, the sender's user device 02-02s has a local software application 02-04s installed, which comprises (or is) an IMAP/SMTP-server. The e-mail client's 02-03s traffic is redirected to "localhost"/127.0.0.1, and the local software application 02-04s listens on port 143 (IMAP) and on port 25 (SMTP) to intercept any incoming/outgoing e-mails. The software 02-04s is further connected to a first cloud service 02-05, which in this case is connected to a second cloud service 02-06, which is a public cloud service such as Amazon Web Service (AWS), Google Cloud Platform (GCP), Microsoft Azure, OpenStack, or the IBM cloud, as long as a functionality is provided to store a file in a protected area which only the first cloud service is able to access.

When the sender has drafted a first e-mail 02-09 on his user device 02-02s and hits "send", the software 02-04s intercepts the first e-mail 02-09 before the first e-mail 02-09 can be received in a sender's e-mail service provider 02-08s in a step 01-P01 of the proposed method for establishing a secure communication channel. The software 02-04s then encrypts the first e-mail 02-09 with content and attachments with an encryption key in step 01-P02. The encryption/decryption keypair can e.g., be an asymmetric keypair securely randomly generated by the software 02-04s and be unique for every sent e-mail. Afterwards, the software 02-04s stores a first data object 02-10 on the second cloud service 02-06 in method step 01-P03. For that, the software 02-04s extracts from the first e-mail 02-09, which it intercepted, an e-mail address of the recipient and sends the encrypted first e-mail 02-09 as (part of) the first data object 02-10 along with the e-mail address of the recipient to the first cloud service 02-05. The first cloud service 02-05 then uploads the first data object 02-10 on the second cloud service 02-06, the cloud storage service. The second cloud service 02-06 generates and returns a first access link 02-11' containing a numerical identifier of the first data object 02-10 to the first cloud service 02-05. The first cloud service 02-05 then generates and returns a second access link 02-11 pointing to the first access link 02-11' to the software 02-04s in step 01-P04. The skilled person of course understands that in case enough storage is available on the first cloud service 02-05, the second cloud service 02-06 can be omitted and the first data object 02-10 can be stored directly thereon. However, since in the described first way the encrypted first e-mail 02-09 is uploaded, large storage requirements must be met and therefore, the solution with an additional cloud storage service 02-06 is discussed. After the access link 02-11 pointing to the first access link 02-11' on the first cloud service 02-05 is generated, the software 02-04s integrates the access link 02-11 with a second data object 02-12, (containing) the decryption key, in method step 01-P05. The second data object 02-12 preferably has the structure "access-link#decryption-key" as a URL. This way, when the link is followed, the decryption key, as it is separated through the hashtag, does not get communicated to the server because of the hash and fragment identifier. The software 02-04s creates a second e-mail 02-13 and enters the second data object 02-12 as content or as an attachment to the second e-mail 02-13. The second e-mail 02-13 is addressed to the e-mail address of the recipient and preferably contains additional information and instructions on how to access the first e-mail 02-09. The software 02-04s sends the second e-mail 02-13 to the sender's e-mail service provider 02-08s which will send it over the potentially unsecure channel via service-to-service to the recipient's e-mail service provider 02-08r in method step 01-P06. This way, e-mail services have long term access to the access link 02-11 and decryption key. The second e-mail 02-13 is then forwarded to the recipient's e-mail client 02-03r.

When the recipient receives the second e-mail 02-13 in their e-mail client 02-03r, they can decide to open the second data object 02-12 upon which the recipient's browser 02-07r on the recipient's user device 02-02r requests and receives a web application code of the software 02-04r in the recipient's browser 02-07r from the first cloud service 02-05. The recipient then has to authenticate themselves in the web application of the software 02-04r in method step 01-P07. As part of the authentication process 01-P07, the recipient first is prompted on the web application of the software 02-04r to set a password. The software 02-04 can then e.g. complete the set-up of an account assigned to the e-mail address which the sender initially provided to which the recipient can later log-in using this e-mail address and the newly set password. It is possible for the recipient to connect to this account from a different user device or at a later date e.g., also when he has a local application of the software 02-04 installed. After the password has been set, the first cloud service 02-05 sends a confirmation e-mail 02-14 to the e-mail address of the recipient provided by the sender. Depending on how severely the recipient's mailbox is compromised, this confirmation e-mail 02-14 may also be intercepted by an attacker. This can leave behind evidence of their actions in the mailbox, depending on their access. In order to confirm the password change/set, the recipient must click on the confirmation link sent in the confirmation mail 02-14. This protects against unintended access when access links get forwarded/sent to an unintended recipient, as the unintended recipient cannot confirm the password change unless they also have access to the recipient's mailbox. Afterwards, the recipient can perform a log-in on the software web application 02-04r with the newly confirmed password, after which the first cloud service 02-05 will request the first data object 02-10 from the second cloud service 02-06. The second cloud service 02-06 returns the first data object 02-10 to the first cloud service 02-05 which will send the first data object 02-10 (or only the encrypted first e-mail 02-09) to the recipient's browser 02-07r in method step 01-P08. JavaScript extracts the decryption key from the second data object 02-12. With both the encrypted first e-mail 02-09 and the decryption key available in their browser 02-07r, JavaScript together with the SubtleCrypto interface of the Web Crypto API can be used to decrypt the first e-mail 02-09 and display the decrypted content in the recipient's browser 02-07r on the recipient's user device 02-02r in method step 01-P09.

Preferably, a public key of the sender was stored inside of the first e-mail 02-09 or the first data object 02-10 automatically by the local software application 02-04s. The recipient can then draft a reply in their browser 02-07r using JavaScript, wherein this public key is used to encrypt the reply e-mail.

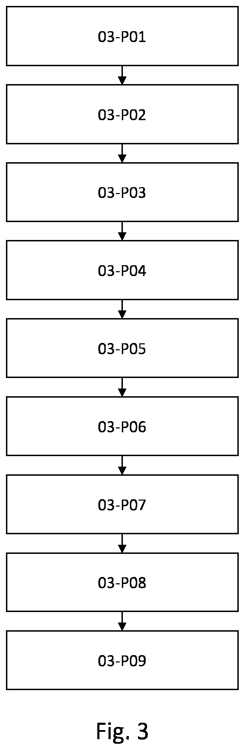

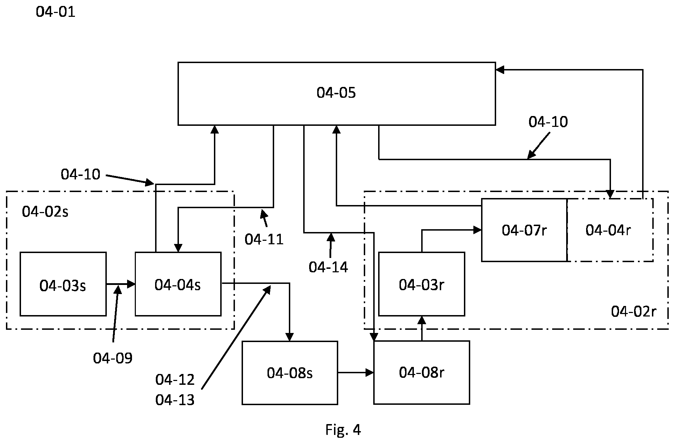

Figures 3 and 4 visualize the exemplary second way of carrying out important steps of the method for establishing a secure e-mail communication channel, which was already discussed under SUMMARY OF THE INVENTION. Here, figure 3 shows a flowchart with steps 03-P01 to 03-P09, which will be explained in detail with reference to the data processing system 04-01 in figure 4. The exact order in which method steps 03-P01 to 03-P09 can of course vary and the skilled person will understand in which alternative orders the respective steps 03-P01 to 03-P09 can also be carried out, while still establishing a secure e-mail communication channel.

This second way is motivated by the large storage requirements of the described first way, which can quickly transform into a detrimental financial burden, even when the method according to the first way is only carried out (e.g., once per e-mail address or per recipient who is not enrolled prior) as a means for performing a first encryption handshake. The second way seeks to drastically reduce storage requirements such that a dedicated cloud storage service (second cloud service 02-06 in figure 2) can be omitted.

The data processing system 04-01 in figure 4 also comprises two user devices 04-02, a sender's user device 04-02s and a recipient's user device 04-02r, wherein the user devices 04-02 again only show the respective features necessary to carry out the method steps. The respective user device 04-02 can be a personal computer, a mobile phone, or any other device with a storage unit and a processing unit, as long as it can have an internet connection and is at least able to run a respective browser 04-07 and has a means to display information. Again, both user devices 04-02 have an e-mail client 04-03 installed locally, but the method could e.g., also work if the recipient opened his mailbox in his browser. Additionally, the sender's user device 04-02s again has a local software application 04-04s installed, which comprises (or is) an IMAP/SMTP-server. The e-mail client's 04-03s traffic is redirected to "localhost"/127.0.0.1, and the local software application 04-04s listens on port 143 (IMAP) and on port 25 (SMTP) to intercept any incoming/outgoing e-mails of the sender. The local software application 04-04s is connected to a first cloud service 04-05 (communication via WebSockets).

As before, the sender drafts a first e-mail 04-09 as usual with content and attachment(s) in his e-mail client 04-03s entering at least one e-mail address of a recipient and hits the "send" button. The local software application 04-04s catches/intercepts the outgoing first e-mail 04-09 in method step 03-P01, before it can be received by a (server of a) sender's e-mail provider 04-08s.

The software 04-04s looks for (or generates) an encryption/decryption key pair and in method step 03-P02, the software 04-04s encrypts the first e-mail 04-09 (and its attachments) with the encryption key. The software 04-04s here creates an HTML file and adds the encrypted first e-mail 04-09 as a JavaScript variable in the HTML file. The decryption key can be added to a first data object 04-10 containing additional information or the decryption key can be treated by the software 04-04s as the first data object 04-10, wherein the created HTML file containing the encrypted first e-mail is treated as a second data object 04-12. The smaller the first data object 04-10 is, the less storage is required for the following step 03-P03.

In method step 03-P03, the software 04-04s stores the first data object 04-10 on the first cloud service 04-05 together with the e-mail address of the recipient. It is possible to additionally perform a check on the first cloud service 04-05 whether the sender is logged into a verified account. The decryption key on the first cloud service 04-05 can be associated with the account of the sender in addition to the e-mail address of the recipient. Assigning the decryption keys with the account of the sender serves as a form of "signing" the e-first mail for authenticity. For this, the sender's account details can be compared with the decrypted "From" e-mail header of the first e-mail 04-09 to verify the sender's identity.

The first cloud service 04-05 returns a generated access link 04-11, a key identifier, pointing to the first data object 04-10 and recipient e-mail address pair to the software 04-04s in method step 03-P04. Afterwards, the software integrates the access link 04-11 with the second data 04-12 object by adding the access link 04-11 as a further JavaScript variable to the HTML file.

The software 04-04s creates a second e-mail 04-13 and attaches the second data object 04-12 to it. In method step 03-P06, the software 04-04s sends the second e-mail 04-13 (unencrypted) to the sender's e-mail service provider 04-08s from which it is transmitted (service-to-service) to the recipient's e-mail service provider 04-08r with the usual layer of encryption. The second e-mail 04-13 preferably contains additional information for the recipient, such as e.g., step-by-step instructions how to proceed to decrypt the received first e-mail 04-09.

The recipient receives the second e-mail 04-13 in his local e-mail client 04-03r or in a web application of his mailbox. The recipient opens the second data object 04-12 (the HTML file) in their web browser 04-07r. Upon opening the second data object 04-12, the recipient in their browser 04-07r is directed to a web application of the software 04-04r, which is also connected to (or part of) the first cloud service 04-05. The software 04-04 can e.g., first check whether the recipient's e-mail address entered by the sender is already associated with an account. If not, the software web application 04-04r preferably asks the recipient if they already have an account (associated with another e-mail address) for the software 04-04, after which they are prompted to log into their account if the answer is yes and asked if the e-mail address provided by the sender should be added to their existing account. The recipient is prompted to set or enter a password as part of the authentication process in method step 03-P07, after which no matter if a new password was set or if the entered e-mail address should be added to an existing account, a confirmation e-mail 04-14 containing a confirmation link is sent from the first cloud service 04-05 to the e-mail address of the recipient which the sender originally provided. Also, in case authentication tokens from LocalStorage were used, the confirmation mail 04-14 will be sent to the originally provided e-mail address of the recipient. The confirmation mail 04-14 preferably contains additional information about the action that is to be confirmed, such that a recipient of such a confirmation mail 04-14 is alarmed that there is someone trying to access their e-mails or reading along, in case that it is not the recipient who initiated the action to be confirmed. Now only in the case, that the recipient clicks on the confirmation link will the log-in/creation of a new account/authentication be deemed successful/completed.

After successful authentication (method step 03-P07), the software web application 04-04r using JavaScript will retrieve the first data object 04-10 containing the decryption key using the key identifier (access link 04-11) from the HTML file from the first cloud service 04-05 in method step 03-P08.

Now the recipient has both the decryption key and the encrypted first e-mail 04-09 readily available in the browser 04-07r of the recipient. JavaScript will then (automatically) fetch the encrypted content from the HTML file and decrypt the first e-mail 04-09 using the decryption key. The browser 04-07r provides a simple e-mail reader to display the decrypted content and give the recipient options, e.g., to send a reply e-mail.

In both ways (and further feasible variants of the method) is it possible to create an account for the recipient, such as a preliminary account right after the software 02-04s, 04-04s intercepts the outgoing first e-mail 02-09, 04-09 and checks, whether the e-mail address for the recipient is already assigned to an account on the first cloud service 02-05, 04-05, or such as a permanent account in which a preliminary account can be integrated into once the recipient has confirmed his identity and completed the authentication step 01-P07, 03-P07. It is also possible, that the e-mail address of the recipient provided by the sender and the recipient's main e-mail address are the same, such that the status of a preliminary account can be switched to permanent one after completion of authentication. Log-in attempts to permanent accounts are tracked by the software 02-04, 04-04 and at every successful log-in, the recipient is displayed a message containing information about location and time of the last log-in and/or last log-in attempts, or information about location and time of the last password change. Users of permanent accounts can set up a Multi-Factor-Authentication (MFA) procedure for future log-ins. Future password changes can then be confirmed through the MFA, or through performing the authentication step 01-P07, 03-P07 again. The confirmation mail 02-14, 04-14 in this case is sent to the recipient's (user's) main e-mail address connected to their permanent account. The user of a permanent account can also be notified upon unsuccessful log-in attempts to their account by sending an e-mail to their main e-mail address.

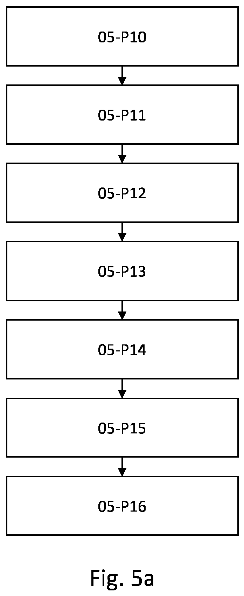

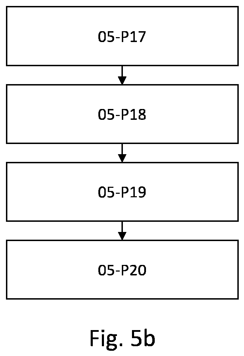

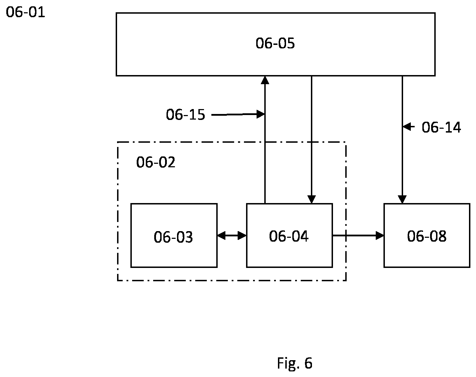

In contrast, figures 5a, 5b, and 6 are discussed to highlight further aspects of the invention. First, in step 05-P10, a software application 06-04 is downloaded and installed locally on a user device 06-02. The software 06-04 can exemplarily be realized as an e-mail client 06-03 plug-in using an incoming/outgoing e-mail transport callback function. In step 05-P11, the respective traffic from an e-mail client 06-03 on the user device 06-02 is redirected to the local software application 06-04, upon which the main steps of setting up are completed. The set-up steps 05-P10, 05-P11 can take place beforehand on a sender's user device (02-02s, 04-02s) and/or can take place on a recipient's user device (02-02r, 04-02r), especially also after steps of the method were carried out at least once according to the first or second way described above. This makes the software 02-04, 04-04, 06-04 particularly easy to use and allows for fast integration and data transfer. As described before, to "redirect" the e-mail client's 06-03 traffic is directed to "localhost"/127.0.0.1, and the local software application 06-04 listens on port 143 (IMAP) and on port 25 (SMTP) and intercepts any incoming/outgoing e-mails. The local software application 06-04 is connected to a first cloud service 06-05 (communication via WebSockets). In method step 05-P12, an account is registered with an e-mail address and a first password, wherein the registration comprises sending a registration request, upon which a confirmation mail 06-14 with a confirmation link will be sent to the entered e-mail address, wherein the account on the first cloud service 06-05 is only created and assigned to the entered e-mail address if the confirmation link in the confirmation e-mail 06-14 is followed.

The user can further perform method steps 05-P13 to 05-P16 to securely store a file, such as an important private key 06-15. To do this, the user provides the private key 06-15 to the software 06-04. The software 06-04 preferably automatically creates a second password in method step 05-P13, which is a securely randomly generated password. Alternatively, the user can also be prompted to enter a second password of their choice. The second password is then used to (symmetrically) encrypt the file, the private key 06-15, in method step 05-P14. Afterwards, the software 06-04 uploads the encrypted private key 06-15 to the first cloud service 06-05, where it is assigned to the user's account on the first cloud service 06-05. It is also possible to store the encrypted private key 06-15 in a hidden directory on the first cloud service 06-05 or a further cloud service and return an access link to the software 06-04 which can store the access link locally or add the access link to the user's account on the first cloud service 06-05. The local software 06-04 stores the second password, which is used to decrypt the uploaded file, preferably automatically in a mailbox of the user's e-mail account in method step 05-P16. The second password may be part of a name of a folder, which is then unsubscribed to hide it from view in the user's client 06-03. The second password can also be part of a drafted e-mail. Additionally, the software 06-04 can place a copy of the drafted e-mail in a inside of the "Sent"-folder, where additional MIME-headers can be appended containing a copy of the second password. Simultaneous use of these ways to store a copy of the second password in the mailbox of the user ensure that the user's e-mail account is filled with duplicate copies of the second password. The software of course saves all locations where it stored the second password automatically, such that the second password is not lost.

In order to retrieve the encrypted private key, method steps 05-P17 to 05-P20 can be performed. As with all steps discussed before, the skilled person can of course derive an alternative order in which the method steps can be carried out while not departing from the inventive concept. When the user requests access to their private key, they are prompted to log-in to their registered account on the first cloud service 06-05. Of course, MFA procedures can also be used to log into the account. Here, the user logs into their account on the first cloud service 06-05 using their e-mail address and the first password in method step 05-P17. Upon successful log-in, the software 06-04 retrieves the second password from the e-mail client 06-05 or a server of the e-mail service provider 06-08 from one of the copies' locations in method step 05-P18. The software 06-04 also retrieves the encrypted private key 06-15 on the first cloud service 06-05 in method step 05-P19. When the encrypted private key 06-15 are both available in the software 06-04, the software 06-04 can decrypt the private key in method step 05-P20.

With the method steps 05-P13 to 05-P20 it is guaranteed that the respective user never loses his private key and can access it from multiple devices on which he has the software application installed. Additionally, without the private key being stored locally on the user device 06-02, the user would also not have to worry about someone gaining access to their private key in case of theft. Also, the password/key creation, storage and retrieval process can be completely automated and transparent, making it easy for users with basic technical ability to use the software 06-04, using familiar account registration, password reset and login mechanics.

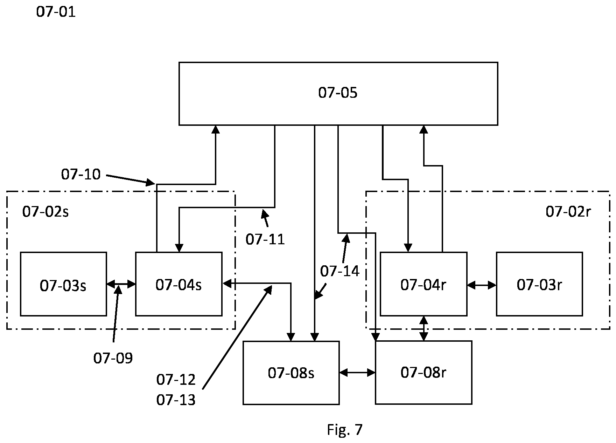

In the data system 07-01 of figure 7, an exemplary inventive e-mail transfer is described, wherein both the sender and the recipient use a local application of the software 07-04 on their user device 07-02, with the software 07-04 intercepting all incoming/outgoing (first) e-mails 07-09. As discussed with respect to the second way (figures 3 and 4), the software intercepts first e-mails 07-09 before they are transmitted to the e-mail service provider 07-08 and encrypts the content and attachments of the first e-mail 07-09 and adds them as a JavaScript variable to an HTML file. The decryption key, necessary for the decryption of the encrypted first e-mail 07-09, is uploaded as a (or part of a) first data object 07-10 to the first cloud service 07-05. The cloud service 07-05 returns an access link 07-11 uniquely identifying the decryption key on the cloud service. The software 07-04, which preferably is a IMAP/SMTP-server, integrates the access link 07-11 in the HTML file, which is treated as a second data object 07-12, wherein the access link 07-11 is integrated as a further JavaScript variable. The software 07-04 generates a second e-mail 07-13, attaches the second data object 07-12, containing both the access link 07-11 and the encrypted first e-mail 07-09, to it and sends it to the e-mail service provider 07-08, after which it is sent as usual via service-to-service to the respective e-mail address of the recipient. Here, the recipient also has an application of the software 07-04r installed locally on their user device 07-02r, intercepting any incoming/outgoing e-mails from/to their e-mail client 07-03r. When the second e-mail 07-13 is received in the recipient's e-mail service provider 07-08r, it is forwarded to the local software application 07-04r which can identify the encrypted content and, depending on settings in recipient's account, registered on the first cloud service 07-05, can automatically retrieve the first data object 07-10, preferably only the decryption key, from the first cloud service 07-05, using the access link 07-11 provided in the second data object 07-12. Then the software application 07-04r preferably automatically decrypts the first e-mail 07-09 and sends the decrypted e-mail to the e-mail client 07-03r of the recipient, where it can be displayed as usual.

This way, the users can send and receive e-mails 07-09 seemingly as usual, even though the e-mails 07-09 are sent as encrypted HTML-attachments, because they are decrypted and/or reformatted by the local software applications 07-04 and then forwarded to the respective e-mail client 07-02 of the user.

The embodiments shown here are merely examples of the present invention and should not be construed as limiting. Alternative embodiments considered by those skilled in the art are equally encompassed within the scope of the present invention.

**Bezugszeichenliste:**

| | | |
|---|---|---|
| 01-/03- | P01 | Interception step |
| 01-/03- | P02 | Encryption step |
| 01-/03- | P03 | Storing first data object step |
| 01-/03- | P04 | Access link generation step |
| 01-/03- | P05 | Integration step |
| 01-/03- | P06 | Sending second data object step |
| 01-/03- | P07 | Authentication step |
| 01-/03- | P08 | Requesting first data object step |
| 01-/03- | P09 | Decryption/Displaying step |
| 05- | P10 | Download and installation step |
| 05- | P11 | Redirecting step |
| 05- | P12 | Registration step |
| 05- | P13 | Creation of second password step |
| 05- | P14 | Encryption step |
| 05- | P15 | Upload step |
| 05- | P16 | Storing second password step |
| 05- | P17 | Log-in step |
| 05- | P18 | Second password retrieval step |
| 05- | P19 | File retrieval step |
| 05- | P20 | Decryption step |
| 02-/04-/06-/07- | 01 | Data processing system |
| 02-/04-/06-/07- | 02 | User device |
| 02-/04-/06-/07- | 03 | e-mail client |
| 02-/04-/06-/07- | 04 | Software |
| 02-/04-/06-/07- | 05 | First cloud service |
| 02- | 06 | Second cloud service |
| 02-/04- | 07 | Browser |
| 02-/04-/06-/07- | 08 | e-mail service provider |
| 02-/04-/07- | 09 | First e-mail |
| 02-/04-/07- | 10 | First data object |
| 02-/04-/07- | 11 | Access link |
| 02-/04-/07- | 12 | Second data object |
| 02-/04-/07- | 13 | Second e-mail |
| 02-/04-/06-/07- | 14 | Confirmation e-mail |

## Claims

1. A computer implemented method for establishing a secure e-mail communication channel between a sender and at least one recipient, including the following steps:
- intercepting via a first software (02-04, 04-04, 06-04, 07-04), which is connected to a first cloud service (02-05, 04-05, 06-05, 07-05), between an e-mail client (02-03s, 04-03s, 07-03s) of the sender and a respective e-mail provider (02-08s, 04-08s, 07-08s) of the sender an outgoing first e-mail (02-09, 04-09, 07-09);
- encrypting via the first software (02-04, 04-04, 06-04, 07-04) the first e-mail (02-09, 04-09, 07-09) with an encryption key;
- storing via the first software (02-04, 04-04, 06-04, 07-04) a first data object (02-10, 04-10, 07-10), which contains either the encrypted first e-mail (02-09, 04-09, 07-09) or the decryption key, on the first cloud service (02-05, 04-05, 06-05, 07-05) or a second cloud service (02-06);
- generating an access link (02-11, 04-11, 07-11) containing a unique identifier pointing to the first data object (02-10, 04-10, 07-10) on the first cloud service (02-05, 04-05, 06-05, 07-05) or second cloud service (02-06) and storing an e-mail address of the recipient in the first cloud service (02-05, 04-05, 06-05, 07-05) assigned to the access link (02-11, 04-11, 07-11);
- integrating the access link (02-11, 04-11, 07-11) with a second data object (02-12, 04-12, 07-12), wherein the second data object (02-12, 04-12, 07-12) contains either the decryption key or the encrypted first e-mail (02-09, 04-09, 07-09), wherein it contains the decryption key if the first data object (02-10, 04-10, 07-10) contains the encrypted first e-mail (02-09, 04-09, 07-09) and vice versa,
- sending the second data object (02-12, 04-12, 07-12) in a second e-mail (02-13, 04-13, 07-13) or as an e-mail attachment attached to a second e-mail (02-13, 04-13, 07-13) via the first software (02-04, 04-04, 06-04, 07-04) to the e-mail provider (02-08s, 04-08s, 07-08s) of the sender and to the e-mail address of the recipient;
- authenticating in the first cloud service (02-05, 04-05, 06-05, 07-05) the recipient upon following the access link (02-11, 04-11, 07-11) via
∘ directing the recipient in a browser (02-07r, 04-07r) on a recipient's user device (02-02r, 04-02r, 07-02r) to the first cloud service (02-05, 04-05, 06-05, 07-05);
∘ prompting the recipient to enter a password; and
∘ sending a confirmation mail (02-14, 04-14, 06-14, 07-14) with a confirmation link to the e-mail address of the recipient stored in the first cloud service (02-05, 04-05, 06-05, 07-05);
- requesting and receiving via the first cloud service (02-05, 04-05, 06-05, 07-05) the first data object (02-10, 04-10, 07-10) in the recipient's browser (02-07r, 04-07r) upon following the confirmation link;
- decrypting and displaying the first e-mail (02-09, 04-09, 07-09) to the recipient on the recipient's user device (02-02r, 04-02r, 07-02r).

2. The method of claim 1, wherein the step of authenticating the recipient further includes prompting the recipient to enter an e-mail address, wherein multiple e-mail addresses of the recipient can be assigned to the entered e-mail address, wherein an account is created on the first cloud service (02-05, 04-05, 06-05, 07-05) and assigned to at least one of the recipient's e-mail addresses, preferably the e-mail address entered by the recipient, and/or wherein a public key is assigned to the account of the recipient, preferably wherein at every log-in the recipient is displayed a message containing information about location and time of the last log-in and/or last log-in attempt, and/or wherein at an unsuccessful log-in attempt the recipient is displayed a message containing information about location and time when the password was last changed.

3. The method of any one of the preceding claims, wherein the recipient can set up a Multi-Factor-Authentication procedure for log-ins, and/or wherein the recipient can reset the password and confirm it via the Multi-Factor-Authentication procedure or by clicking a link in a new confirmation e-mail, preferably sent to the entered e-mail address, and/or wherein the recipient receives an alert upon unsuccessful log-in attempts.

4. The method of any one of the preceding claims, wherein the first e-mail (02-09, 04-09, 07-09) is encrypted with the encryption key and then inserted as a JavaScript variable in an HTML file, wherein the HTML file also contains the unique identifier as a JavaScript variable for a fast association of first data object (02-10, 04-10, 07-10) and second data object (02-12, 04-12, 07-12).

5. The method of the preceding claim, wherein an authentication token is stored using LocalStorage with Web Storage API.

6. The method of claim 1, including the following steps
- determining whether a public key is available for the recipient in the first cloud service (02-05, 04-05, 06-05, 07-05); and
- if a public key is available:
∘ encrypting via the first software (02-04, 04-04, 06-04, 07-04) the first e-mail (02-09, 04-09, 07-09) with the public key of the recipient,
∘ wherein a local software application installed on the recipient's user device (02-02r, 04-02r, 07-02r) and connected to the first cloud service (02-05, 04-05, 06-05, 07-05) between an e-mail client (02-03r, 04-03r, 07-03r) of the recipient and an e-mail provider (02-08r, 04-08r, 07-08r) of the recipient intercepts, identifies and decrypts encrypted first e-mails (02-09, 04-09, 07-09) before sending them to the e-mail client (02-03r, 04-03r, 07-03r), such that encrypted and unencrypted e-mails are displayed alike to the recipient.

7. The method of any one of the preceding claims, wherein the encrypted first e-mail (02-09, 04-09, 07-09) is signed with a public key of the sender for authentication, and/or wherein the encrypted first e-mail (02-09, 04-09, 07-09) contains a/the public key of the sender, preferably further comprising a replying step, via:
- drafting a reply e-mail to the encrypted first e-mail (02-09, 04-09, 07-09), wherein the reply is drafted in the browser (02-07r, 04-07r) using JavaScript if there is no local software application available on the recipient's user device (02-02r, 04-02r, 07-02r);
- encrypting the reply e-mail with the public key of the sender;
- sending the encrypted reply e-mail to an e-mail address of the sender.

8. The method of the preceding claim, wherein the software (02-04, 04-04, 06-04, 07-04) further processes the encrypted first e-mail (02-09, 04-09, 07-09).

9. The method of any one of the preceding claims, wherein the first data object (02-10, 04-10, 07-10) on the first cloud service (02-05, 04-05, 06-05, 07-05) or second cloud service (02-06) is deleted after a certain period of time, and/or wherein the recipient can enter criteria for deletion and account settings regarding security on the first cloud service (02-05, 04-05, 06-05, 07-05).

10. The method of any one of the preceding claims, further containing the following set-up step:
- downloading and installing a software application locally (02-04, 04-04, 06-04, 07-04) on a user device (02-02, 04-02, 06-02, 07-02);
- redirecting the traffic from a respective e-mail client (02-03, 04-03, 06-03, 07-03) on the user device (02-02, 04-02, 06-02, 07-02) to the first software (02-04, 04-04, 06-04, 07-04) via the local software application (02-04, 04-04, 06-04, 07-04);
- registering an account with an e-mail address and a first password in the software (02-04, 04-04, 06-04, 07-04) connected to the first cloud service (02-05, 04-05, 06-05, 07-05), wherein the registration is carried out via:
∘ upon registration request, sending a confirmation mail (02-14, 04-14, 06-14, 07-14) with a confirmation link to the entered e-mail address;
∘ creating the account assigned to the entered e-mail address after the confirmation link is followed.

11. The method of claim 10, further comprising a step of storing a private key (06-15):
- creating a second password, preferably wherein the second password is a securely randomly generated password created by the local software application (02-04, 04-04, 06-04, 07-04), preferably automatically;
- symmetrically encrypting the private key (06-15) with the second password;
- uploading the encrypted private key (06-15) to the first cloud service (02-05, 04-05, 06-05, 07-05);
- storing the second password in an e-mail mailbox of the e-mail address, preferably automatically via the local software application (02-04, 04-04, 06-04, 07-04);
and comprising the following steps to access the private key (06-15):
- asking the user to log in to their account on the first cloud service (02-05, 04-05, 06-05, 07-05) with their e-mail address and the first password;
- upon successful log-in, retrieving via the local software application (02-04, 04-04, 06-04, 07-04) the second password from the e-mail mailbox;
- retrieving the encrypted private key (06-15) on the first cloud service (02-05, 04-05, 06-05, 07-05);
- decrypting the private key (06-15) via the local software application (02-04, 04-04, 06-04, 07-04).

12. The method of claim 11, wherein the local software application (02-04, 04-04, 06-04, 07-04) places a copy of the second password in a hidden folder name, and/or in a drafted e-mail message, and/or in a "sent"-folder in a MIME-header.

13. A data processing system (02-01, 04-01, 06-01, 07-01) comprising means for carrying out the method of any one of claims 1 to 12.

14. A computer program comprising instructions which, when the program is executed by a computer of a data processing system (02-01, 04-01, 06-01, 07-01), cause the data processing system (02-01, 04-01, 06-01, 07-01) to carry out the method of any one of claims 1 to 12.

15. A computer-readable medium comprising instructions which, when executed by a computer of a data processing system (02-01, 04-01, 06-01, 07-01), cause the data processing system (02-01, 04-01, 06-01, 07-01) to carry out the method of any one of claims 1 to 12.

16. A computer implemented method for sending an e-mail via a secure e-mail communication channel between a sender and at least one recipient, including the following steps:
- intercepting via a first software (02-04, 04-04, 06-04, 07-04), which is connected to a first cloud service (02-05, 04-05, 06-05, 07-05), between an e-mail client (02-03s, 04-03s, 07-03s) of the sender and a respective e-mail provider (02-08s, 04-08s, 07-08s) of the sender an outgoing first e-mail (02-09, 04-09, 07-09);
- encrypting via the first software (02-04, 04-04, 06-04, 07-04) the first e-mail (02-09, 04-09, 07-09) with an encryption key;
- storing via the first software (02-04, 04-04, 06-04, 07-04) a first data object (02-10, 04-10, 07-10), which contains either the encrypted first e-mail (02-09, 04-09, 07-09) or the decryption key, on the first cloud service (02-05, 04-05, 06-05, 07-05) or a second cloud service (02-06);
- checking, whether an account is assigned to an e-mail address of the recipient in the first cloud service (02-05, 04-05, 06-05, 07-05);
- generating an access link (02-11, 04-11, 07-11) containing a unique identifier pointing to the first data object (02-10, 04-10, 07-10) on the first cloud service (02-05, 04-05, 06-05, 07-05) or second cloud service (02-06) and storing the e-mail address of the recipient in the first cloud service (02-05, 04-05, 06-05, 07-05) assigned to the access link (02-11, 04-11, 07-11);
- integrating the access link (02-11, 04-11, 07-11) with a second data object (02-12, 04-12, 07-12), wherein the second data object (02-12, 04-12, 07-12) contains either the decryption key or the encrypted first e-mail (02-09, 04-09, 07-09), wherein it contains the decryption key if the first data object (02-10, 04-10, 07-10) contains the encrypted first e-mail (02-09, 04-09, 07-09) and vice versa,
- sending the second data object (02-12, 04-12, 07-12) in a second e-mail (02-13, 04-13, 07-13) or as an e-mail attachment attached to a second e-mail (02-13, 04-13, 07-13) via the first software (02-04, 04-04, 06-04, 07-04) to the e-mail provider (02-08s, 04-08s, 07-08s) of the sender and to the e-mail address of the recipient;
- authenticating in the first cloud service (02-05, 04-05, 06-05, 07-05) the recipient via:
∘ connecting to the first cloud service (02-05, 04-05, 06-05, 07-05) by following the access link (02-11, 04-11, 07-11);
∘ proving access to a recipient's account or prompting the recipient to enter a password if no account assigned to the e-mail address of the recipient was found when checking whether an account is assigned to the e-mail address of the recipient;
∘ sending a confirmation mail (02-14, 04-14, 06-14, 07-14) with a confirmation link to the e-mail address of the recipient stored in the first cloud service (02-05, 04-05, 06-05, 07-05) if no account assigned to the e-mail address of the recipient was found when checking, whether an account is assigned to the e-mail address of the recipient;
- requesting and receiving via the first cloud service (02-05, 04-05, 06-05, 07-05) the first data object (02-10, 04-10, 07-10) either in the recipient's browser (02-07r, 04-07r) or in the local software application (07-04r) upon following the confirmation link or upon proving access to the recipient's account;
- decrypting and displaying the first e-mail (02-09, 04-09, 07-09) to the recipient on the recipient's user device (02-02r, 04-02r, 07-02r).

## Patentansprüche

1. Ein computerimplementiertes Verfahren zum Aufbau eines sicheren E-Mail-Kommunikationskanals zwischen einem Absender und mindestens einem Empfänger, das die folgenden Schritte umfasst:
- Abfangen mittels einer ersten Software (02-04, 04-04, 06-04, 07-04), die mit einem ersten Cloud-Dienst (02-05, 04-05, 06-05, 07-05) verbunden ist, zwischen einem E-Mail-Client (02-03s, 04-03s, 07-03s) des Absenders und einem jeweiligen E-Mail-Anbieter (02-08s, 04-08s, 07-08s) des Absenders;
- Verschlüsseln der ersten E-Mail (02-09, 04-09, 07-09) mittels der ersten Software (02-04, 04-04, 06-04, 07-04) mit einem Verschlüsselungsschlüssel;
- Speichern eines ersten Datenobjekts (02-10, 04-10, 07-10) über die erste Software (02-04, 04-04, 06-04, 07-04), das entweder die verschlüsselte erste E-Mail (02-09, 04-09, 07-09) oder den Entschlüsselungsschlüssel enthält, auf dem ersten Cloud-Dienst (02-05, 04-05, 06-05, 07-05) oder einem zweiten Cloud-Dienst (02-06);
- Erzeugen eines Zugriffslinks (02-11, 04-11, 07-11), der eine eindeutige Kennung enthält, die auf das erste Datenobjekt (02-10, 04-10, 07-10) im ersten Cloud-Dienst (02-05, 04-05, 06-05, 07-05) oder zweiten Cloud-Dienst (02-06) verweist, und Speichern einer E-Mail-Adresse des Empfängers im ersten Cloud-Dienst (02-05, 04-05, 06-05, 07-05), die dem Zugriffslink (02-11, 04-11, 07-11) zugeordnet ist;
- Integrieren des Zugriffslinks (02-11, 04-11, 07-11) mit einem zweiten Datenobjekt (02-12, 04-12, 07-12), wobei das zweite Datenobjekt (02-12, 04-12, 07-12) entweder den Entschlüsselungsschlüssel oder die verschlüsselte erste E-Mail (02-09, 04-09, 07-09) enthält, wobei es den Entschlüsselungsschlüssel enthält, wenn das erste Datenobjekt (02-10, 04-10, 07-10) die verschlüsselte erste E-Mail (02-09, 04-09, 07-09) enthält und umgekehrt,
- Senden des zweiten Datenobjekts (02-12, 04-12, 07-12) in einer zweiten E-Mail (02-13, 04-13, 07-13) oder als E-Mail-Anhang, der an eine zweite E-Mail (02-13, 04-13, 07-13) über die erste Software (02-04, 04-04, 06-04, 07-04) an den E-Mail-Anbieter (02-08s, 04-08s, 07-08s) des Absenders und an die E-Mail-Adresse des Empfängers;
- Authentifizierung des Empfängers im ersten Cloud-Dienst (02-05, 04-05, 06-05, 07-05) nach dem Aufrufen des Zugriffslinks (02-11, 04-11, 07-11) über
∘ Weiterleiten des Empfängers in einem Browser (02-07r, 04-07r) auf dem Benutzergerät des Empfängers (02-02r, 04-02r, 07-02r) zum ersten Cloud-Dienst (02-05, 04-05, 06-05, 07-05);
∘ Aufforderung des Empfängers zur Eingabe eines Passworts; und
∘ Senden einer Bestätigungs-E-Mail (02-14, 04-14, 06-14, 07-14) mit einem Bestätigungslink an die im ersten Cloud-Dienst (02-05, 04-05, 06-05, 07-05) gespeicherte E-Mail-Adresse des Empfängers;
- Anfordern und Empfangen des ersten Datenobjekts (02-10, 04-10, 07-10) über den ersten Cloud-Dienst (02-05, 04-05, 06-05, 07-05) im Browser des Empfängers (02-07r, 04-07r) nach dem Anklicken des Bestätigungslinks;
- Entschlüsseln und Anzeigen der ersten E-Mail (02-09, 04-09, 07-09) für den Empfänger auf dem Benutzergerät des Empfängers (02-02r, 04-02r, 07-02r).

2. Verfahren nach Anspruch 1, wobei der Schritt der Authentifizierung des Empfängers ferner das Auffordern des Empfängers zur Eingabe einer E-Mail-Adresse umfasst, wobei der eingegebenen E-Mail-Adresse mehrere E-Mail-Adressen des Empfängers zugeordnet werden können, wobei ein Konto auf dem ersten Cloud-Dienst (02-05, 04-05, 06-05, 07-05) erstellt und mindestens einer der E-Mail-Adressen des Empfängers, vorzugsweise der vom Empfänger eingegebenen E-Mail-Adresse, zugeordnet wird, und/oder wobei dem Konto des Empfängers ein öffentlicher Schlüssel zugeordnet wird, vorzugsweise wobei dem Empfänger bei jeder Anmeldung dem Empfänger eine Meldung angezeigt wird, die Informationen über Ort und Zeit der letzten Anmeldung und/oder des letzten Anmeldeversuchs enthält, und/oder wobei dem Empfänger bei einem erfolglosen Anmeldeversuch eine Meldung angezeigt wird, die Informationen über Ort und Zeit der letzten Passwortänderung enthält.

3. Verfahren nach einem der vorstehenden Ansprüche , wobei der Empfänger ein Multi-Faktor-Authentifizierungsverfahren für Anmeldungen einrichten kann, und/oder wobei der Empfänger das Passwort zurücksetzen und es über das Multi-Faktor-Authentifizierungsverfahren oder durch Anklicken eines Links in einer neuen Bestätigungs-E-Mail, vorzugsweise an die eingegebene E-Mail-Adresse gesendet, bestätigen kann, und/oder wobei der Empfänger bei erfolglosen Anmeldeversuchen eine Benachrichtigung erhält.

4. Verfahren nach einem der vorstehenden Ansprüche, wobei die erste E-Mail (02-09, 04-09, 07-09) mit dem Verschlüsselungsschlüssel verschlüsselt und anschließend als JavaScript-Variable in eine HTML-Datei eingefügt wird, wobei die HTML-Datei zudem die eindeutige Kennung als JavaScript-Variable für eine schnelle Zuordnung des ersten Datenobjekts (02-10, 04-10, 07-10) und des zweiten Datenobjekts (02-12, 04-12, 07-12) enthält.

5. Verfahren nach dem vorstehenden Anspruch, wobei ein Authentifizierungstoken unter Verwendung von LocalStorage mit der Web Storage API gespeichert wird.

6. Verfahren nach Anspruch 1, das die folgenden Schritte umfasst
- Feststellen, ob für den Empfänger im ersten Cloud-Dienst ein öffentlicher Schlüssel verfügbar ist (02-05, 04-05, 06-05, 07-05); und
- falls ein öffentlicher Schlüssel verfügbar ist:
∘ Verschlüsseln der ersten E-Mail (02-09, 04-09, 07-09) mittels der ersten Software (02-04, 04-04, 06-04, 07-04) mit dem öffentlichen Schlüssel des Empfängers,
∘ wobei eine lokale Softwareanwendung, die auf dem Benutzergerät des Empfängers (02-02r, 04-02r, 07-02r) installiert und mit dem ersten Cloud-Dienst (02-05, 04-05, 06-05, 07-05) verbunden ist, zwischen einem E-Mail-Client (02-03r, 04-03r, 07-03r) des Empfängers und einem E-Mail-Anbieter (02-08r, 04-08r, 07-08r) des Empfängers verschlüsselte erste E-Mails (02-09, 04-09, 07-09) abfängt, identifiziert und entschlüsselt, bevor er sie an den E-Mail-Client (02-03r, 04-03r, 07-03r) weiterleitet, sodass verschlüsselte und unverschlüsselte E-Mails für den Empfänger gleich dargestellt werden.

7. Verfahren nach einem der vorstehenden Ansprüche, wobei die verschlüsselte erste E-Mail (02-09, 04-09, 07-09) zur Authentifizierung mit einem öffentlichen Schlüssel des Absenders signiert ist und/oder wobei die verschlüsselte erste E-Mail (02-09, 04-09, 07-09) den öffentlichen Schlüssel des Absenders enthält, vorzugsweise ferner umfassend einen Antwortschritt, durch:
- Verfassen einer Antwort-E-Mail auf die verschlüsselte erste E-Mail (02-09, 04-09, 07-09), wobei die Antwort im Browser (02-07r, 04-07r) unter Verwendung von JavaScript verfasst wird, falls auf dem Benutzergerät des Empfängers (02-02r, 04-02r, 07-02r);
- Verschlüsseln der Antwort-E-Mail mit dem öffentlichen Schlüssel des Absenders;
- Senden der verschlüsselten Antwort-E-Mail an eine E-Mail-Adresse des Absenders.

8. Verfahren nach dem vorstehenden Anspruch, wobei die Software (02-04, 04-04, 06-04, 07-04) die verschlüsselte erste E-Mail (02-09, 04-09, 07-09) weiterverarbeitet.

9. Verfahren nach einem der vorstehenden Ansprüche, wobei das erste Datenobjekt (02-10, 04-10, 07-10) auf dem ersten Cloud-Dienst (02-05, 04-05, 06-05, 07-05) oder dem zweiten Cloud-Dienst (02-06) nach einer bestimmten Zeitspanne gelöscht wird und/oder wobei der Empfänger Kriterien für die Löschung und Kontoeinstellungen bezüglich der Sicherheit auf dem ersten Cloud-Dienst (02-05, 04-05, 06-05, 07-05) eingeben kann.

10. Verfahren nach einem der vorstehenden Ansprüche, das ferner den folgenden Einrichtungsschritt umfasst:
- lokales Herunterladen und Installieren einer Softwareanwendung (02-04, 04-04, 06-04, 07-04) auf einem Benutzergerät (02-02, 04-02, 06-02, 07-02);
- Umleiten des Datenverkehrs von einem jeweiligen E-Mail-Client (02-03, 04-03, 06-03, 07-03) auf dem Benutzergerät (02-02, 04-02, 06-02, 07-02) an die erste Software (02-04, 04-04, 06-04, 07-04) über die lokale Softwareanwendung (02-04, 04-04, 06-04, 07-04);
- Registrieren eines Kontos mit einer E-Mail-Adresse und einem ersten Passwort in der Software (02-04, 04-04, 06-04, 07-04), die mit dem ersten Cloud-Dienst (02-05, 04-05, 06-05, 07-05) verbunden ist, wobei die Registrierung erfolgt durch:
∘ auf Registrierungsanfrage das Versenden einer Bestätigungs-E-Mail (02-14, 04-14, 06-14, 07-14) mit einem Bestätigungslink an die eingegebene E-Mail-Adresse;
∘ Erstellen des der eingegebenen E-Mail-Adresse zugeordneten Kontos, nachdem der Bestätigungslink angeklickt wurde.

11. Verfahren nach Anspruch 10, das ferner einen Schritt zum Speichern eines privaten Schlüssels (06-15) umfasst:
- Erstellen eines zweiten Passworts, wobei das zweite Passwort vorzugsweise ein sicher zufällig generiertes Passwort ist, das von der lokalen Softwareanwendung (02-04, 04-04, 06-04, 07-04) erstellt wird, vorzugsweise automatisch;
- symmetrische Verschlüsselung des privaten Schlüssels (06-15) mit dem zweiten Passwort;
- Hochladen des verschlüsselten privaten Schlüssels (06-15) in den ersten Cloud-Dienst (02-05, 04-05, 06-05, 07-05);
- Speichern des zweiten Passworts in einem E-Mail-Postfach der E-Mail-Adresse, vorzugsweise automatisch über die lokale Softwareanwendung (02-04, 04-04, 06-04, 07-04);
und umfassend die folgenden Schritte zum Zugriff auf den privaten Schlüssel (06-15):
- Aufforderung an den Benutzer, sich mit seiner E-Mail-Adresse und dem ersten Passwort bei seinem Konto auf dem ersten Cloud-Dienst (02-05, 04-05, 06-05, 07-05) anzumelden;
- nach erfolgreicher Anmeldung Abrufen des zweiten Passworts aus dem E-Mail-Postfach über die lokale Softwareanwendung (02-04, 04-04, 06-04, 07-04);
- Abrufen des verschlüsselten privaten Schlüssels (06-15) beim ersten Cloud-Dienst (02-05, 04-05, 06-05, 07-05);
- Entschlüsseln des privaten Schlüssels (06-15) über die lokale Softwareanwendung (02-04, 04-04, 06-04, 07-04).

12. Verfahren nach Anspruch 11, wobei die lokale Softwareanwendung (02-04, 04-04, 06-04, 07-04) eine Kopie des zweiten Passworts in einem versteckten Ordnernamen und/oder in einer Entwurfs-E-Mail-Nachricht und/oder in einem "Gesendet"-Ordner in einem MIME-Header ablegt.

13. Ein Datenverarbeitungssystem (02-01, 04-01, 06-01, 07-01), das Mittel zur Durchführung des Verfahrens nach einem der Ansprüche 1 bis 12 umfasst.

14. Ein Computerprogramm, das Anweisungen umfasst, die, wenn das Programm von einem Computer eines Datenverarbeitungssystems (02-01, 04-01, 06-01, 07-01) ausgeführt wird, bewirken, dass das Datenverarbeitungssystem (02-01, 04-01, 06-01, 07-01) veranlasst, das Verfahren nach einem der Ansprüche 1 bis 12 auszuführen.

15. Ein computerlesbares Medium, das Anweisungen umfasst, die, wenn sie von einem Computer eines Datenverarbeitungssystems (02-01, 04-01, 06-01, 07-01) ausgeführt werden, bewirken, dass das Datenverarbeitungssystem (02-01, 04-01, 06-01, 07-01) veranlasst, das Verfahren nach einem der Ansprüche 1 bis 12 auszuführen.

16. Ein computerimplementiertes Verfahren zum Senden einer E-Mail über einen sicheren E-Mail-Kommunikationskanal zwischen einem Absender und mindestens einem Empfänger, das die folgenden Schritte umfasst:
- Abfangen mittels einer ersten Software (02-04, 04-04, 06-04, 07-04), die mit einem ersten Cloud-Dienst (02-05, 04-05, 06-05, 07-05) verbunden ist, zwischen einem E-Mail-Client (02-03s, 04-03s, 07-03s) des Absenders und einem jeweiligen E-Mail-Anbieter (02-08s, 04-08s, 07-08s) des Absenders;
- Verschlüsseln der ersten E-Mail (02-09, 04-09, 07-09) mittels der ersten Software (02-04, 04-04, 06-04, 07-04) mit einem Verschlüsselungsschlüssel;
- Speichern eines ersten Datenobjekts (02-10, 04-10, 07-10) über die erste Software (02-04, 04-04, 06-04, 07-04), das entweder die verschlüsselte erste E-Mail (02-09, 04-09, 07-09) oder den Entschlüsselungsschlüssel enthält, auf dem ersten Cloud-Dienst (02-05, 04-05, 06-05, 07-05) oder einem zweiten Cloud-Dienst (02-06);
- Prüfen, ob der E-Mail-Adresse des Empfängers im ersten Cloud-Dienst ein Konto zugeordnet ist (02-05, 04-05, 06-05, 07-05);
- Erzeugen eines Zugriffslinks (02-11, 04-11, 07-11), der eine eindeutige Kennung enthält, die auf das erste Datenobjekt (02-10, 04-10, 07-10) im ersten Cloud-Dienst (02-05, 04-05, 06-05, 07-05) oder zweiten Cloud-Dienst (02-06) verweist, und Speichern der E-Mail-Adresse des Empfängers im ersten Cloud-Dienst (02-05, 04-05, 06-05, 07-05), die dem Zugriffslink (02-11, 04-11, 07-11) zugeordnet ist;
- Integrieren des Zugriffslinks (02-11, 04-11, 07-11) mit einem zweiten Datenobjekt (02-12, 04-12, 07-12), wobei das zweite Datenobjekt (02-12, 04-12, 07-12) entweder den Entschlüsselungsschlüssel oder die verschlüsselte erste E-Mail (02-09, 04-09, 07-09) enthält, wobei es den Entschlüsselungsschlüssel enthält, wenn das erste Datenobjekt (02-10, 04-10, 07-10) die verschlüsselte erste E-Mail (02-09, 04-09, 07-09) enthält und umgekehrt,
- Senden des zweiten Datenobjekts (02-12, 04-12, 07-12) in einer zweiten E-Mail (02-13, 04-13, 07-13) oder als E-Mail-Anhang, der an eine zweite E-Mail (02-13, 04-13, 07-13) über die erste Software (02-04, 04-04, 06-04, 07-04) an den E-Mail-Anbieter (02-08s, 04-08s, 07-08s) des Absenders und an die E-Mail-Adresse des Empfängers;
- Authentifizierung des Empfängers im ersten Cloud-Dienst (02-05, 04-05, 06-05, 07-05) durch:
∘ Verbindung zum ersten Cloud-Dienst (02-05, 04-05, 06-05, 07-05) durch Folgen des Zugangslinks (02-11, 04-11, 07-11);
∘ Nachweis des Zugriffs auf das Konto des Empfängers oder Aufforderung an den Empfänger zur Eingabe eines Passworts, falls bei der Überprüfung, ob der E-Mail-Adresse des Empfängers ein Konto zugeordnet ist, kein Konto gefunden wurde;
∘ Versenden einer Bestätigungs-E-Mail (02-14, 04-14, 06-14, 07-14) mit einem Bestätigungslink an die im ersten Cloud-Dienst gespeicherte E-Mail-Adresse des Empfängers (02-05, 04-05, 06-05, 07-05), falls bei der Überprüfung, ob der E-Mail-Adresse des Empfängers ein Konto zugeordnet ist, kein Konto gefunden wurde;
- Anfordern und Empfangen des ersten Datenobjekts (02-10, 04-10, 07-10) über den ersten Cloud-Dienst (02-05, 04-05, 06-05, 07-05) entweder im Browser des Empfängers (02-07r, 04-07r) oder in der lokalen Softwareanwendung (07-04r) nach dem Anklicken des Bestätigungslinks oder nach dem Nachweis des Zugriffs auf das Konto des Empfängers;
- Entschlüsseln und Anzeigen der ersten E-Mail (02-09, 04-09, 07-09) für den Empfänger auf dem Benutzergerät des Empfängers (02-02r, 04-02r, 07-02r).

## Revendications

1. Procédé mis en œuvre par ordinateur pour établir un canal de communication par courrier électronique sécurisé entre un expéditeur et au moins un destinataire, comprenant les étapes suivantes :
- intercepter, via un premier logiciel (02-04, 04-04, 06-04, 07-04) connecté à un premier service cloud (02-05, 04-05, 06-05, 07-05), les messages échangés entre un client de messagerie (02-03s, 04-03s, 07-03s) de l'expéditeur et un fournisseur de messagerie électronique respectif (02-08s, 04-08s, 07-08s) de l'expéditeur, un premier e-mail sortant (02-09, 04-09, 07-09) ;
- chiffrer, via le premier logiciel (02-04, 04-04, 06-04, 07-04), le premier e-mail (02-09, 04-09, 07-09) à l'aide d'une clé de chiffrement ;
- stocker via le premier logiciel (02-04, 04-04, 06-04, 07-04) un premier objet de données (02-10, 04-10, 07-10), qui contient soit le premier e-mail chiffré (02-09, 04-09, 07-09) ou la clé de déchiffrement, sur le premier service cloud (02-05, 04-05, 06-05, 07-05) ou un deuxième service cloud (02-06) ;
- générer un lien d'accès (02-11, 04-11, 07-11) contenant un identifiant unique pointant vers le premier objet de données (02-10, 04-10, 07-10) sur le premier service cloud (02-05, 04-05, 06-05, 07-05) ou sur le deuxième service cloud (02-06) et en stockant une adresse e-mail du destinataire dans le premier service cloud (02-05, 04-05, 06-05, 07-05) associée au lien d'accès (02-11, 04-11, 07-11) ;
- intégrer le lien d'accès (02-11, 04-11, 07-11) à un deuxième objet de données (02-12, 04-12, 07-12), le deuxième objet de données (02-12, 04-12, 07-12) contient soit la clé de déchiffrement, soit le premier e-mail chiffré (02-09, 04-09, 07-09), dans lequel il contient la clé de déchiffrement si le premier objet de données (02-10, 04-10, 07-10) contient le premier e-mail chiffré (02-09, 04-09, 07-09) et vice versa,
- envoyer le deuxième objet de données (02-12, 04-12, 07-12) dans un deuxième e-mail (02-13, 04-13, 07-13) ou sous forme de pièce jointe à un deuxième e-mail (02-13, 04-13, 07-13) via le premier logiciel (02-04, 04-04, 06-04, 07-04) au fournisseur de messagerie (02-08s, 04-08s, 07-08s) de l'expéditeur et à l'adresse e-mail du destinataire ;
- authentifier le destinataire dans le premier service cloud (02-05, 04-05, 06-05, 07-05) après avoir suivi le lien d'accès (02-11, 04-11, 07-11) via
∘ rediriger le destinataire dans un navigateur (02-07r, 04-07r) sur l'appareil utilisateur du destinataire (02-02r, 04-02r, 07-02r) vers le premier service cloud (02-05, 04-05, 06-05, 07-05) ;
∘ inviter le destinataire à saisir un mot de passe ; et
∘ envoyer un e-mail de confirmation (02-14, 04-14, 06-14, 07-14) contenant un lien de confirmation à l'adresse e-mail du destinataire stockée dans le premier service cloud (02-05, 04-05, 06-05, 07-05) ;
- demander et recevoir via le premier service cloud (02-05, 04-05, 06-05, 07-05) le premier objet de données (02-10, 04-10, 07-10) dans le navigateur du destinataire (02-07r, 04-07r) après avoir cliqué sur le lien de confirmation ;
- déchiffrer et afficher le premier e-mail (02-09, 04-09, 07-09) à l'intention du destinataire sur le terminal de ce dernier (02-02r, 04-02r, 07-02r).

2. Procédé selon la revendication 1, dans lequel l'étape d'authentification du destinataire comprend en outre le fait d'inviter le destinataire à saisir une adresse électronique, dans lequel plusieurs adresses électroniques du destinataire peuvent être associées à l'adresse électronique saisie, dans lequel un compte est créé sur le premier service cloud (02-05, 04-05, 06-05, 07-05) et attribué à au moins l'une des adresses e-mail du destinataire, de préférence l'adresse e-mail saisie par le destinataire, et/ou dans laquelle une clé publique est attribuée au compte du destinataire, de préférence dans laquelle à chaque connexion, un message contenant des informations sur le lieu et l'heure de la dernière connexion et/ou de la dernière tentative de connexion s'affiche pour le destinataire, et/ou dans lequel, en cas de tentative de connexion infructueuse, un message contenant des informations sur le lieu et l'heure de la dernière modification du mot de passe s'affiche pour le destinataire.

3. Procédé selon l'une quelconque des revendications précédentes de l' , dans lequel le destinataire peut configurer une procédure d'authentification multifactorielle pour les connexions, et/ou dans lequel le destinataire peut réinitialiser le mot de passe et le confirmer via la procédure d'authentification multifactorielle ou en cliquant sur un lien dans un nouvel e-mail de confirmation, de préférence envoyé à l'adresse e-mail saisie, et/ou dans lequel le destinataire reçoit une alerte en cas de tentatives de connexion infructueuses.

4. Procédé selon l'une quelconque des revendications précédentes, dans lequel le premier e-mail (02-09, 04-09, 07-09) est chiffré à l'aide de la clé de chiffrement, puis inséré en tant que variable JavaScript dans un fichier HTML, dans lequel le fichier HTML contient également l'identifiant unique sous forme de variable JavaScript pour une association rapide du premier objet de données (02-10, 04-10, 07-10) et du deuxième objet de données (02-12, 04-12, 07-12).

5. Procédé selon la revendication précédente, dans lequel un jeton d'authentification est stocké à l'aide de LocalStorage avec l'API Web Storage.

6. Procédé selon la revendication 1, comprenant les étapes suivantes
- déterminer si une clé publique est disponible pour le destinataire dans le premier service cloud (02-05, 04-05, 06-05, 07-05) ; et
- si une clé publique est disponible :
∘ chiffrer via le premier logiciel (02-04, 04-04, 06-04, 07-04) le premier e-mail (02-09, 04-09, 07-09) avec la clé publique du destinataire,
∘ dans lequel une application logicielle locale installée sur le dispositif utilisateur du destinataire (02-02r, 04-02r, 07-02r) et connectée au premier service cloud (02-05, 04-05, 06-05, 07-05) entre un client de messagerie (02-03r, 04-03r, 07-03r) du destinataire et un fournisseur de messagerie (02-08r, 04-08r, 07-08r) du destinataire intercepte, identifie et déchiffre les premiers e-mails chiffrés (02-09, 04-09, 07-09) avant de les envoyer au client de messagerie (02-03r, 04-03r, 07-03r), de sorte que les e-mails chiffrés et non chiffrés s'affichent de la même manière pour le destinataire.

7. Procédé selon l'une quelconque des revendications précédentes, dans lequel le premier e-mail chiffré (02-09, 04-09, 07-09) est signé avec une clé publique de l'expéditeur à des fins d'authentification, et/ou dans lequel le premier e-mail chiffré (02-09, 04-09, 07-09) contient une ou la clé publique de l'expéditeur, comprenant de préférence en outre une étape de réponse, via :
- la rédaction d'un e-mail de réponse au premier e-mail chiffré (02-09, 04-09, 07-09), dans laquelle la réponse est rédigée dans le navigateur (02-07r, 04-07r) à l'aide de JavaScript s'il n'y a pas d'application logicielle locale disponible sur le dispositif utilisateur du destinataire (02-02r, 04-02r, 07-02r) ;
- chiffrer l'e-mail de réponse avec la clé publique de l'expéditeur ;
- envoyer l'e-mail de réponse chiffré à une adresse e-mail de l'expéditeur.

8. Procédé selon la revendication précédente, dans lequel le logiciel (02-04, 04-04, 06-04, 07-04) traite en outre le premier e-mail chiffré (02-09, 04-09, 07-09).

9. Procédé selon l'une quelconque des revendications précédentes, dans lequel le premier objet de données (02-10, 04-10, 07-10) sur le premier service cloud (02-05, 04-05, 06-05, 07-05) ou sur le deuxième service cloud (02-06) est supprimé après un certain laps de temps, et/ou dans laquelle le destinataire peut saisir des critères de suppression et des paramètres de compte relatifs à la sécurité sur le premier service cloud (02-05, 04-05, 06-05, 07-05).

10. Procédé selon l'une quelconque des revendications précédentes, comprenant en outre l'étape de configuration suivante :
- télécharger et installer une application logicielle localement (02-04, 04-04, 06-04, 07-04) sur un appareil utilisateur (02-02, 04-02, 06-02, 07-02) ;
- rediriger le trafic provenant d'un client de messagerie électronique respectif (02-03, 04-03, 06-03, 07-03) sur le dispositif utilisateur (02-02, 04-02, 06-02, 07-02) vers le premier logiciel (02-04, 04-04, 06-04, 07-04) via l'application logicielle locale (02-04, 04-04, 06-04, 07-04) ;
- créer un compte avec une adresse e-mail et un premier mot de passe dans le logiciel (02-04, 04-04, 06-04, 07-04) connecté au premier service cloud (02-05, 04-05, 06-05, 07-05), l'enregistrement s'effectuant via :
∘ lors de la demande d'enregistrement, l'envoi d'un e-mail de confirmation (02-14, 04-14, 06-14, 07-14) contenant un lien de confirmation à l'adresse e-mail saisie ;
∘ la création du compte attribué à l'adresse e-mail saisie après avoir cliqué sur le lien de confirmation.

11. Procédé selon la revendication 10, comprenant en outre une étape consistant à stocker une clé privée (06-15) :
- créer un deuxième mot de passe, de préférence un mot de passe généré de manière aléatoire et sécurisée par l'application logicielle locale (02-04, 04-04, 06-04, 07-04), de préférence automatiquement ;
- chiffrer symétriquement la clé privée (06-15) à l'aide du deuxième mot de passe ;
- télécharger la clé privée chiffrée (06-15) vers le premier service cloud (02-05, 04-05, 06-05, 07-05) ;
- stocker le deuxième mot de passe dans une boîte de réception de l'adresse e-mail, de préférence automatiquement via l'application logicielle locale (02-04, 04-04, 06-04, 07-04) ;
et comprenant les étapes suivantes pour accéder à la clé privée (06-15) :
- demander à l'utilisateur de se connecter à son compte sur le premier service cloud (02-05, 04-05, 06-05, 07-05) avec son adresse e-mail et le premier mot de passe ;
- une fois la connexion établie, récupérer via l'application logicielle locale (02-04, 04-04, 06-04, 07-04) le deuxième mot de passe à partir de la boîte de réception ;
- récupérer la clé privée chiffrée (06-15) sur le premier service cloud (02-05, 04-05, 06-05, 07-05) ;
- déchiffrer la clé privée (06-15) via l'application logicielle locale (02-04, 04-04, 06-04, 07-04).

12. Procédé selon la revendication 11, dans lequel l'application logicielle locale (02-04, 04-04, 06-04, 07-04) place une copie du deuxième mot de passe dans un dossier caché, et/ou dans un message électronique en brouillon, et/ou dans un dossier « Envoyés » dans un en-tête MIME.

13. Système de traitement de données (02-01, 04-01, 06-01, 07-01) comprenant des moyens pour mettre en œuvre le procédé selon l'une quelconque des revendications 1 à 12.

14. Programme informatique comprenant des instructions qui, lorsque le programme est exécuté par un ordinateur d'un système de traitement de données (02-01, 04-01, 06-01, 07-01), amènent le système de traitement de données (02-01, 04-01, 06-01, 07-01) à mettre en œuvre le procédé selon l'une quelconque des revendications 1 à 12.

15. Support lisible par ordinateur comprenant des instructions qui, lorsqu'elles sont exécutées par un ordinateur d'un système de traitement de données (02-01, 04-01, 06-01, 07-01), amènent le système de traitement de données (02-01, 04-01, 06-01, 07-01) à mettre en œuvre le procédé selon l'une quelconque des revendications 1 à 12.

16. Procédé mis en œuvre par ordinateur pour envoyer un courrier électronique via un canal de communication sécurisé entre un expéditeur et au moins un destinataire, comprenant les étapes suivantes :
- intercepter, via un premier logiciel (02-04, 04-04, 06-04, 07-04) connecté à un premier service cloud (02-05, 04-05, 06-05, 07-05), entre un client de messagerie (02-03s, 04-03s, 07-03s) de l'expéditeur et un fournisseur de messagerie électronique respectif (02-08s, 04-08s, 07-08s) de l'expéditeur, un premier e-mail sortant (02-09, 04-09, 07-09) ;
- chiffrer, via le premier logiciel (02-04, 04-04, 06-04, 07-04), le premier e-mail (02-09, 04-09, 07-09) à l'aide d'une clé de chiffrement ;
- stocker via le premier logiciel (02-04, 04-04, 06-04, 07-04) un premier objet de données (02-10, 04-10, 07-10), qui contient soit le premier e-mail chiffré (02-09, 04-09, 07-09) ou la clé de déchiffrement, sur le premier service cloud (02-05, 04-05, 06-05, 07-05) ou un deuxième service cloud (02-06) ;
- vérifier si un compte est associé à l'adresse e-mail du destinataire dans le premier service cloud (02-05, 04-05, 06-05, 07-05) ;
- générer un lien d'accès (02-11, 04-11, 07-11) contenant un identifiant unique pointant vers le premier objet de données (02-10, 04-10, 07-10) sur le premier service cloud (02-05, 04-05, 06-05, 07-05) ou sur le deuxième service cloud (02-06) et en stockant l'adresse e-mail du destinataire dans le premier service cloud (02-05, 04-05, 06-05, 07-05) associé au lien d'accès (02-11, 04-11, 07-11) ;
- intégrer le lien d'accès (02-11, 04-11, 07-11) à un deuxième objet de données (02-12, 04-12, 07-12), le deuxième objet de données (02-12, 04-12, 07-12) contient soit la clé de déchiffrement, soit le premier e-mail chiffré (02-09, 04-09, 07-09), dans lequel il contient la clé de déchiffrement si le premier objet de données (02-10, 04-10, 07-10) contient le premier e-mail chiffré (02-09, 04-09, 07-09) et vice versa,
- envoyer le deuxième objet de données (02-12, 04-12, 07-12) dans un deuxième e-mail (02-13, 04-13, 07-13) ou sous forme de pièce jointe à un deuxième e-mail (02-13, 04-13, 07-13) via le premier logiciel (02-04, 04-04, 06-04, 07-04) au fournisseur de messagerie (02-08s, 04-08s, 07-08s) de l'expéditeur et à l'adresse e-mail du destinataire ;
- authentifier le destinataire dans le premier service cloud (02-05, 04-05, 06-05, 07-05) via :
∘ se connecter au premier service cloud (02-05, 04-05, 06-05, 07-05) en suivant le lien d'accès (02-11, 04-11, 07-11) ;
∘ vérifier l'accès au compte du destinataire ou inviter le destinataire à saisir un mot de passe si aucun compte associé à l'adresse e-mail du destinataire n'a été trouvé lors de la vérification de l'existence d'un compte associé à cette adresse ;
∘ envoyer un e-mail de confirmation (02-14, 04-14, 06-14, 07-14) contenant un lien de confirmation à l'adresse e-mail du destinataire enregistrée dans le premier service cloud (02-05, 04-05, 06-05, 07-05) si aucun compte associé à l'adresse e-mail du destinataire n'a été trouvé lors de la vérification visant à déterminer si un compte est associé à l'adresse e-mail du destinataire ;
- demander et recevoir via le premier service cloud (02-05, 04-05, 06-05, 07-05) le premier objet de données (02-10, 04-10, 07-10) soit dans le navigateur du destinataire (02-07r, 04-07r) ou dans l'application logicielle locale (07-04r) après avoir cliqué sur le lien de confirmation ou après avoir prouvé l'accès au compte du destinataire ;
- déchiffrer et afficher le premier e-mail (02-09, 04-09, 07-09) à l'intention du destinataire sur le terminal de ce dernier (02-02r, 04-02r, 07-02r).
